# EUROPEAN PATENT SPECIFICATION

(11) **EP 4 154 598 B1**
(45) Date of publication and mention of the grant of the patent: **25.11.2026**
(21) Application number: 21723804.7
(22) Date of filing: 30.04.2021
(51) Int. Cl.: H04W 36/30, H04W 36/36, H04W 76/19

(54) **RE-ESTABLISHMENT OF COMMUNICATION DEVICES CONFIGURED WITH CONDITIONAL HANDOVER AND OPERATING IN MULTI-RADIO DUAL CONNECTIVITY**
WIEDERHERSTELLUNG VON KOMMUNIKATIONSVORRICHTUNGEN MIT KONFIGURATION MIT BEDINGTEM HANDOVER UND BETRIEB IN MEHRFUNK-DUALKONNEKTIVITÄT
RÉTABLISSEMENT DE DISPOSITIFS DE COMMUNICATION CONFIGURÉS AVEC UN TRANSFERT INTERCELLULAIRE CONDITIONNEL ET FONCTIONNANT DANS UNE CONNECTIVITÉ DOUBLE MULTI-RADIO

(30) Priority: 21.05.2020 US 202063028374 P
(43) Date of publication of application: 29.03.2023
(73) Proprietor: Telefonaktiebolaget LM ERICSSON (PUBL), 16483 Stockholm (SE)
(72) Inventor: DA SILVA, Icaro L.J., 170 77 Solna (SE)
(74) Representative: Ericsson
(86) International application number: PCT/IB2021/053600
(87) International publication number: WO 2021/234481

(56) References cited:
- SHARP: "UE configuration release in RRC reestablishment", vol. RAN WG2, no. bis e-meeting; 20200420 - 20200430, 10 April 2020 (2020-04-10), XP051871527, Retrieved from the Internet <URL:https://ftp.3gpp.org/tsg_ran/WG2_RL2/TSGR2_109bis-e/Docs/R2-2003609.zip R2-2003609 UE configuration release in RRC reestbalishment.DOC> [retrieved on 20200410]
- "3rd Generation Partnership Project; Technical Specification Group Radio Access Network; NR; Radio Resource Control (RRC) protocol specification (Release 16)", vol. RAN WG2, no. V16.0.0, 6 April 2020 (2020-04-06), pages 1 - 835, XP051893854, Retrieved from the Internet <URL:ftp://ftp.3gpp.org/Specs/archive/38_series/38.331/38331-g00.zip 38331-g00.docx> [retrieved on 20200406]
- ERICSSON: "CHO in MR-DC operation", vol. RAN WG3, no. Online Meeting ;20200420 - 20200430, 9 April 2020 (2020-04-09), XP051874163, Retrieved from the Internet <URL:https://ftp.3gpp.org/tsg_ran/WG3_Iu/TSGR3_107bis_e/Docs/R3-202367.zip R3-202367 - (TP for NR Mob BL CR for TS 38.423) CHO in MR-DC operation.docx> [retrieved on 20200409]

## Description

### TECHNICAL FIELD

The present disclosure relates generally to communications, and more particularly to a method by a UE capable of operating in MR-DC mode in a network.

### BACKGROUND

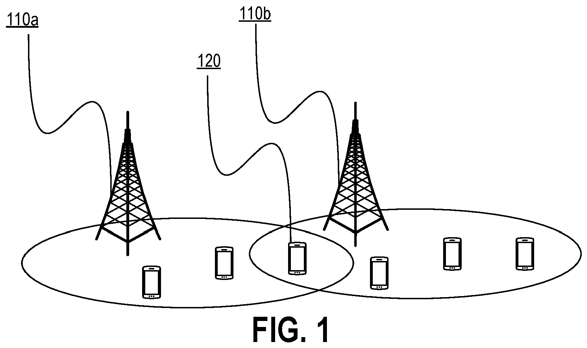

FIG. 1 illustrates a communication network with multiple network nodes 110a-b and communication devices 120 (also referred to herein as a user equipment ("UE")). In some examples, the communication device 120 may be connected to a wireless network via a first network node 110a (which may be referred to as a source network node) and be handed over to a second network node 110b (which may be referred to as a target network node).

In some examples, an new radio ("NR") legacy Rel-15 UE triggers a re-establishment procedure upon different failure cases that can be detected (e.g., Radio Link Failure and Handover Failure). In response to triggering the re-establishment procedure, the UE can perform some initiation steps (e.g., as defined in 5.3.7.2 of Release 15 RRC specification TS 38.331 V15.9.0 (2020-03)) before performing cell selection, and the steps defined 5.3.7.3 (actions following cell selection while timer T311 is running).

One of these initiation steps is the release of multi-radio dual connectivity ("MR-DC"), meaning that if the UE is operating in MR-DC and detects a failure leading to a re-establishment, the UE shall release MR-DC (e.g., release secondary cell group ("SCG") and SCG measConfig) before transmitting a radio recourse control ("RRC") Reestablishment Request, and receiving an RRC Reestablishment (for configuring a first signaling radio bearer ("SRB1")) and an RRC Reconfiguration (e.g., for resuming data radio bearers ("DRBs"), applying delta signaling on top of UE's current configuration without MR-DC, as that has been released).

Sharp: "UE configuration release in RRC reestablishment", 3GPP Draft R2-2003609, 20-30 April 2020 describes a proposal for the UE to not release otherconfig including delayBudgetReportingConfig and overheatingAssistanceConfig and MCG SCells if the UE is configured with conditionalReconfiguration and the selected cell is a CHO candidate cell.

### SUMMARY

Aspects and embodiments of the present disclosure are set out by the appended claims.

In various embodiments described herein, a potential advantage of the UE not deleting MR-DC at re-establishment initiation before it determines which cell it has selected while timer T311 is running, is that it avoids a state/configuration mismatch between the UE and the target candidate cell the UE executes CHO, in case the UE does not continue with the re-establishment procedure.

### BRIEF DESCRIPTION OF THE DRAWINGS

The accompanying drawings, which are included to provide a further understanding of the disclosure and are incorporated in and constitute a part of this application, illustrate certain non-limiting embodiments of the present disclosure. In the drawings:
FIG. 1 is a schematic diagram illustrating an example of a telecommunications network.
FIG. 2 is a data flow diagram illustrating CHO handling in a MR-DC configuration;
FIG. 3 illustrates an example of a RRCReconfiguration message according to some embodiments of the present disclosure;
FIG. 4 illustrates an example of a CondReconfigToAddModList IE according to some embodiments of the present disclosure;
FIG. 5 is a table illustrating an example of CondReconfigToAddMod field descriptions according to some embodiments of the present disclosure;
FIG. 6 is a table illustrating an example of an explanation for condReconfigAdd according to some embodiments of the present disclosure;
FIG. 7 illustrates an example of a ConditionalReconfiguration IE according to some embodiments of the present disclosure;
FIG. 8 is a table illustrating an example of ConditionalReconfiguration field descriptions;
FIG. 9 illustrates an example of a VarConditionalReconfig according to some embodiments of the present disclosure;
FIGS. 10-11 are data flow diagrams corresponding to RRC connection re-establishment successful and RRC re-establishment fallback to RRC establishment successful, according to some embodiments of the present disclosure;
FIG. 12 is a block diagram illustrating a wireless device UE according to some embodiments of the present disclosure;
FIG. 13 is a block diagram illustrating a radio access network RAN node (e.g., a base station eNB/gNB) according to some embodiments of the present disclosure;
FIG. 14 is a block diagram illustrating a core network ("CN") node (e.g., an AMF node, an SMF node, etc.) according to some embodiments of the present disclosure;
FIG. 15 is a block diagram illustrating operations performed by a UE capable of operating in MR-DC in a network according to some embodiments herein.
FIG. 16 is a block diagram illustrating operations of performing a MR-DC release according to some embodiments herein.
FIG. 17 is a block diagram illustrating operations performed of releasing the SCG configuration according to some embodiments herein.
FIG. 18 is a block diagram of a wireless network in accordance with some embodiments;
FIG. 19 is a block diagram of a user equipment in accordance with some embodiments
FIG. 20 is a block diagram of a virtualization environment in accordance with some embodiments;
FIG. 21 is a block diagram of a telecommunication network connected via an intermediate network to a host computer in accordance with some embodiments;
FIG. 22 is a block diagram of a host computer communicating via a base station with a user equipment over a partially wireless connection in accordance with some embodiments;
FIG. 23 is a block diagram of methods implemented in a communication system including a host computer, a base station and a user equipment in accordance with some embodiments;
FIG. 24 is a block diagram of methods implemented in a communication system including a host computer, a base station and a user equipment in accordance with some embodiments;
FIG. 25 is a block diagram of methods implemented in a communication system including a host computer, a base station and a user equipment in accordance with some embodiments; and
FIG. 26 is a block diagram of methods implemented in a communication system including a host computer, a base station and a user equipment in accordance with some embodiments.

### DETAILED DESCRIPTION

The present disclosure will now be described more fully hereinafter with reference to the accompanying drawings, in which examples of embodiments of the present disclosure are shown. The present disclosure may, however, be embodied in many different forms and should not be construed as limited to the embodiments set forth herein. Rather, these embodiments are provided so that this disclosure will be thorough and complete, and will fully convey the scope of present the present disclosure to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter, which is defined by the appended claims. For example, certain details of the described embodiments may be modified, omitted, or expanded upon without departing from the scope of the described subject matter.

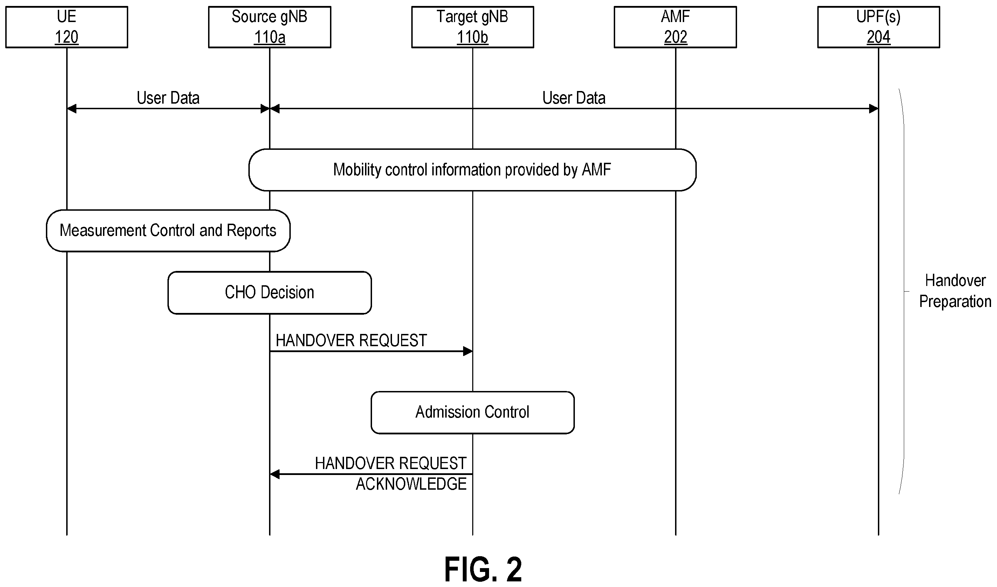

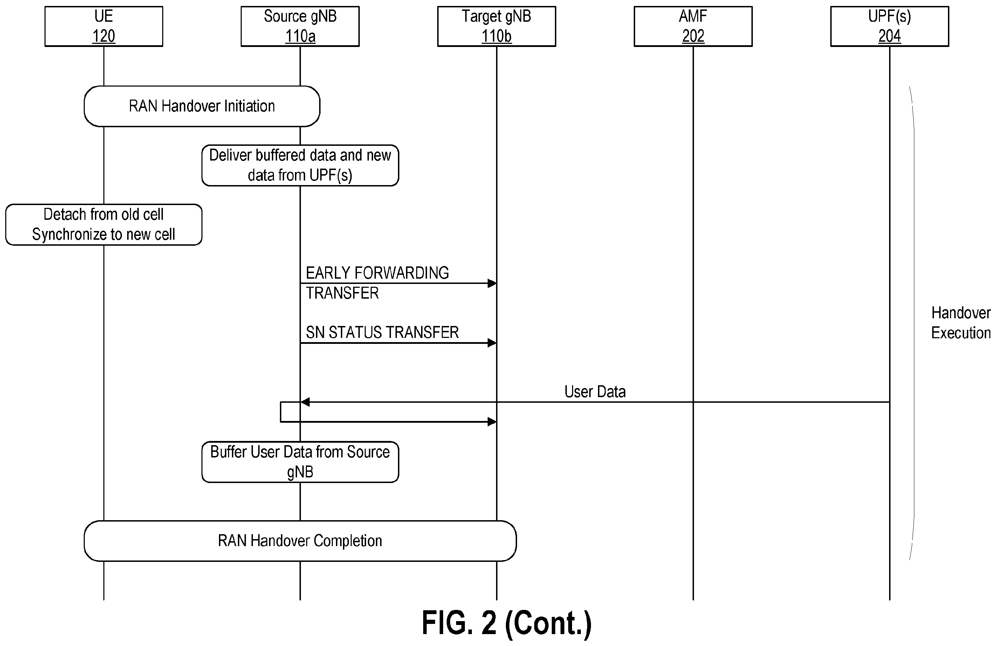

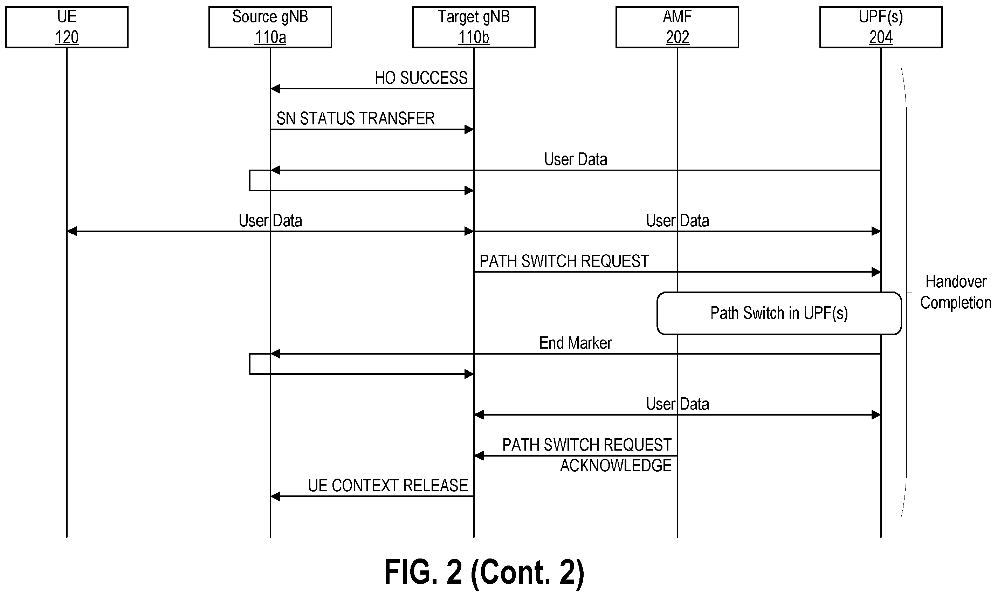

FIG. 2 is a data flow diagram illustrating operations performed by a UE 120, source gNB 110a, target gNB 110b, AMF 202, and UPF 204 to perform conditional handover ("CHO") handling in a MR-DC configuration. Conditional Handover and failure handling is discussed below.

Two new work items for mobility enhancements in long term evolution ("LTE") and new radio ("NR") have started in 3rd generation partnership project ("3GPP") in release 16. An objective of the work items are to improve the robustness at handover and to decrease the interruption time at handover. For that purpose, Conditional Handover (specified in RRC as a case of a conditional reconfiguration) is being specified. Conditional handover is described in stage 2, TS 38.300 in a new chapter 9.2.3.X. A Conditional Handover ("CHO") is defined as a handover that is executed by the UE when one or more handover execution conditions are met. The UE starts evaluating the execution condition(s) upon receiving the CHO configuration, and stops evaluating the execution condition(s) once the execution condition(s) is met.

In some examples, the CHO configuration contains the configuration of CHO candidate cell(s) generated by the candidate gNB(s) and execution condition(s) generated by the source gNB. In additional or alternative examples, an execution condition may consist of one or two trigger condition(s). Only single reference signal ("RS") type is supported and at most two different trigger quantities (e.g., reference signal received power ("RSRP") and reference signal received quality ("RSRQ"), and signal interference-to-noise ratio ("SINR")) can be configured simultaneously for the evaluation of CHO execution condition of a single candidate cell. In additional or alternative examples, before any CHO execution condition is satisfied, upon reception of handover ("HO") command (without CHO configuration), the UE executes the HO procedure as described in clause 9.2.3.2 of TS 38.300, regardless of any previously received CHO configuration. In additional or alternative examples, while executing CHO (e.g., from the time when the UE starts synchronization with target cell) UE does not monitor source cell.

CHO is not supported for N2 based handover in this release of the specification.

It has been agreed that if a UE configured with CHO (e.g., having stored at least one RRCReconfiguration per target candidate cell) detects a failure (e.g., radio link failure detection while monitoring CHO), the UE initiates the re-establishment procedure and, if the selected cell while timer T311 is running is a cell for which the UE has a stored CHO configuration (e.g., an RRCReconfiguration) the UE applies the stored configuration instead of performing re-establishment. Hence, the UE only continues with re-establishment if the selected cell is not a cell for which the UE does not have a stored RRCReconfiguration.

If a failure is detected and attemptCondReconfig is configured (part of CHO configuration) and if the selected cell is one of the candidate cells which the reconfigurationWithSync is included in the masterCellGroup in VarCondtionalReCconfig, the UE apply the stored condRRCReconfig associated to the selected cell and perform actions. Otherwise, the UE continues with the re-establishment procedure.

In RAN2#109e it has been agreed concerning the CHO and MR-DC operation that CHO (MCG) can work together with MR-DC (e.g., receive CHO when MR-DC is configured), receive SCG addition when CHO condition is configured; not preclude SCG configuration in RRC Reconfiguration with conditional reconfiguration; and limit to cases without RAN3 impact. Hence, according to the following agreements, a UE may be operating in MR-DC while it is monitoring CHO. And, a stored RRCReconfiguration generated by a target candidate may contain SCG configuration. When the UE executes CHO upon the fulfillment of the execution condition there is no problem. And the RRC Reconfiguration generated by the target candidate can be applied, including the SCG configuration(s).

However, a problem exists in case the UE monitoring CHO and operating in MR-DC detects a failure and initiates re-establishment. According to the running CR, the UE deletes MR-DC before cell selection.

In some embodiments, methods at a UE device capable of operating in MR-DC and initiating a re-establishment procedure, include initiating a re-establishment procedure; delaying the release of MR-DC if the UE is configured with conditional handover ("CHO"); applying a target cell configuration (i.e. apply the stored condRRCReconfig associated to the selected cell and perform actions), if upon cell selection the UE configured with CHO selects a cell for which it has a stored target configuration (i.e. the selected cell is one of the candidate cells which the reconfigurationWithSync is included in the masterCellGroup in VarCondtionalReCconfig); releasing MR-DC release if upon cell selection the UE configured with CHO selects a cell for which it does not have a stored target configuration (i.e. the selected cell is one of the candidate cells which the reconfigurationWithSync is included in the masterCellGroup in VarCondtionalReCconfig); and releasing MR-DC release if upon cell selection the UE configured with CHO is not configured with an indication from the network that the UE can perform CHO upon re-establishment initiation (e.g. if the UE is not configured with the indication attemptCondReconfig in its CHO configuration).

The advantage of the UE not deleting MR-DC at re-establishment initiation before it determines which cell it has selected while timer T311 is running, is that is avoids a state/configuration mismatch between the UE and the target candidate cell the UE executes CHO, in case the UE does not continue with re-establishment procedure.

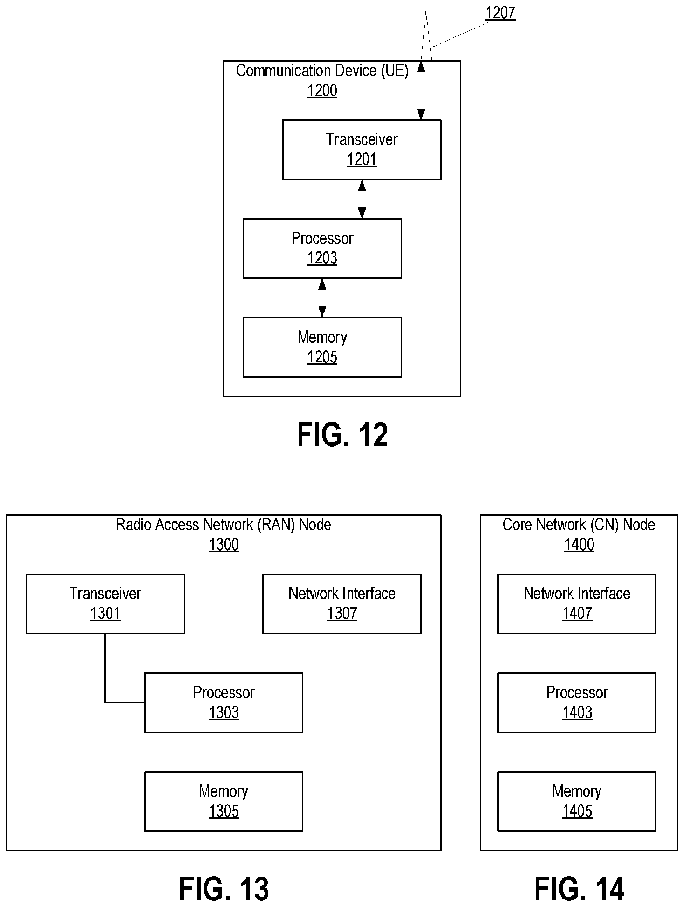

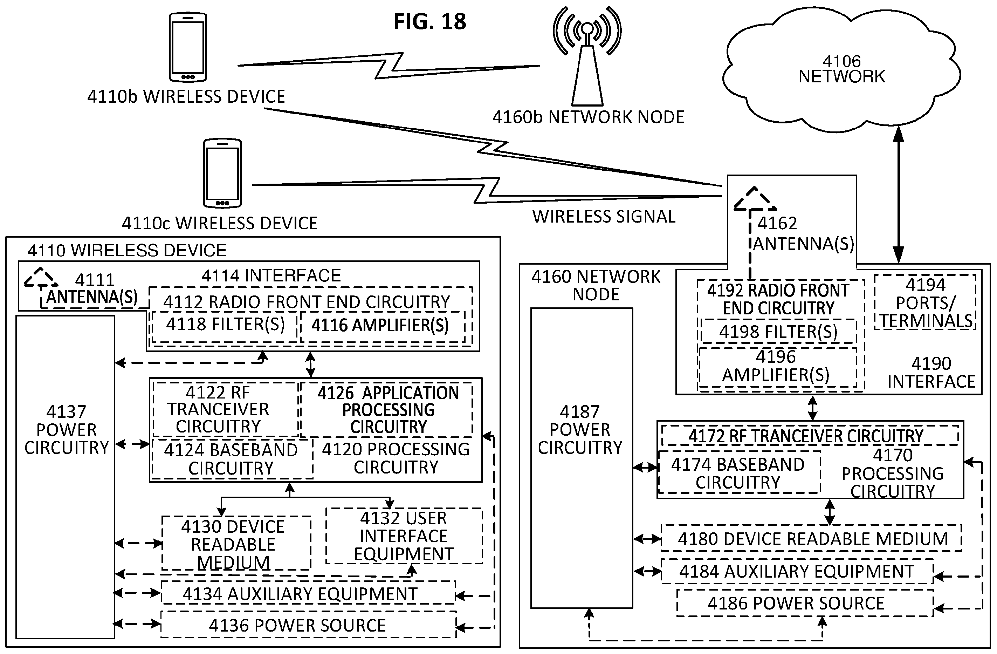

FIG. 12 is a block diagram illustrating elements of a communication device UE 1200 (also referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of the present disclosure. (Communication device 1200 may be provided, for example, as discussed below with respect to wireless device 4110 of FIG. 18.) As shown, communication device UE may include an antenna 1207 (e.g., corresponding to antenna 4111 of FIG. 18), and transceiver circuitry 1201 (also referred to as a transceiver, e.g., corresponding to interface 4114 of FIG. 18) including a transmitter and a receiver configured to provide uplink and downlink radio communications with a base station(s) (e.g., corresponding to network node 4160 of FIG. 18, also referred to as a RAN node) of a radio access network. Communication device UE may also include processing circuitry 1203 (also referred to as a processor, e.g., corresponding to processing circuitry 4120 of FIG. 18) coupled to the transceiver circuitry, and memory circuitry 1205 (also referred to as memory, e.g., corresponding to device readable medium 4130 of FIG. 18) coupled to the processing circuitry. The memory circuitry 1205 may include computer readable program code that when executed by the processing circuitry 1203 causes the processing circuitry to perform operations according to embodiments disclosed herein. According to other embodiments, processing circuitry 1203 may be defined to include memory so that separate memory circuitry is not required. Communication device UE may also include an interface (such as a user interface) coupled with processing circuitry 1203, and/or communication device UE may be incorporated in a vehicle.

As discussed herein, operations of communication device UE may be performed by processing circuitry 1203 and/or transceiver circuitry 1201. For example, processing circuitry 1203 may control transceiver circuitry 1201 to transmit communications through transceiver circuitry 1201 over a radio interface to a radio access network node (also referred to as a base station) and/or to receive communications through transceiver circuitry 1201 from a RAN node over a radio interface. Moreover, modules may be stored in memory circuitry 1205, and these modules may provide instructions so that when instructions of a module are executed by processing circuitry 1203, processing circuitry 1203 performs respective operations (e.g., operations discussed below with respect to Example Embodiments relating to wireless communication devices).

FIG. 13 is a block diagram illustrating elements of a radio access network RAN node 1300 (also referred to as a network node, base station, eNodeB/eNB, gNodeB/gNB, etc.) of a Radio Access Network ("RAN") configured to provide cellular communication according to embodiments of the present disclosure. (RAN node 1300 may be provided, for example, as discussed below with respect to network node 4160 of FIG. 18.) As shown, the RAN node may include transceiver circuitry 1301 (also referred to as a transceiver, e.g., corresponding to portions of interface 4190 of FIG. 18) including a transmitter and a receiver configured to provide uplink and downlink radio communications with mobile terminals. The RAN node may include network interface circuitry 1307 (also referred to as a network interface, e.g., corresponding to portions of interface 4190 of FIG. 18) configured to provide communications with other nodes (e.g., with other base stations) of the RAN and/or core network CN. The network node may also include processing circuitry 1303 (also referred to as a processor, e.g., corresponding to processing circuitry 4170) coupled to the transceiver circuitry, and memory circuitry 1305 (also referred to as memory, e.g., corresponding to device readable medium 4180 of FIG. 18) coupled to the processing circuitry. The memory circuitry 1305 may include computer readable program code that when executed by the processing circuitry 1303 causes the processing circuitry to perform operations according to embodiments disclosed herein. According to other embodiments, processing circuitry 1303 may be defined to include memory so that a separate memory circuitry is not required.

As discussed herein, operations of the RAN node may be performed by processing circuitry 1303, network interface 1307, and/or transceiver 1301. For example, processing circuitry 1303 may control transceiver 1301 to transmit downlink communications through transceiver 1301 over a radio interface to one or more mobile terminals UEs and/or to receive uplink communications through transceiver 1301 from one or more mobile terminals UEs over a radio interface. Similarly, processing circuitry 1303 may control network interface 1307 to transmit communications through network interface 1307 to one or more other network nodes and/or to receive communications through network interface from one or more other network nodes. Moreover, modules may be stored in memory 1305, and these modules may provide instructions so that when instructions of a module are executed by processing circuitry 1303, processing circuitry 1303 performs respective operations (e.g., operations discussed below with respect to Example Embodiments relating to RAN nodes).

According to some other embodiments, a network node may be implemented as a core network ("CN") node without a transceiver. In such embodiments, transmission to a wireless communication device UE may be initiated by the network node so that transmission to the wireless communication device UE is provided through a network node including a transceiver (e.g., through a base station or RAN node). According to embodiments where the network node is a RAN node including a transceiver, initiating transmission may include transmitting through the transceiver.

FIG. 14 is a block diagram illustrating elements of a CN node 1400 (e.g., an SMF node, an AMF node, etc.) of a communication network configured to provide cellular communication according to embodiments of the present disclosure. As shown, the CN node 1400 may include network interface circuitry 1407 (also referred to as a network interface) configured to provide communications with other nodes of the core network and/or the radio access network RAN. The CN node 1400 may also include a processing circuitry 1403 (also referred to as a processor) coupled to the network interface circuitry, and memory circuitry 1405 (also referred to as memory) coupled to the processing circuitry. The memory circuitry 1405 may include computer readable program code that when executed by the processing circuitry 1403 causes the processing circuitry to perform operations according to embodiments disclosed herein. According to other embodiments, processing circuitry 1403 may be defined to include memory so that a separate memory circuitry is not required.

As discussed herein, operations of the CN node 1400 may be performed by processing circuitry 1403 and/or network interface circuitry 1407. For example, processing circuitry 1403 may control network interface circuitry 1407 to transmit communications through network interface circuitry 1407 to one or more other network nodes and/or to receive communications through network interface circuitry from one or more other network nodes. Moreover, modules may be stored in memory 1405, and these modules may provide instructions so that when instructions of a module are executed by processing circuitry 1403, processing circuitry 1403 performs respective operations (e.g., operations discussed below with respect to Example Embodiments relating to core network nodes).

Various embodiments herein describe scenarios in which a UE is configured with Multi-Radio Dual Connectivity ("MR-DC") and conditional handover ("CHO"), detects a failure and initiates re-establishment procedure. Some embodiments are described herein in relation with NR-DC (e.g., when both master and secondary node are NR gNBs), however similar operations are equally applicable to other DC scenarios (e.g., NR evolved universal terrestrial radio access ("E-UTRA") DC ("NE-DC")), next generation ("NG")-RAN E-UTRA DC ("(NG)EN-DC"), and LTE DC).

In some embodiments herein, synonyms for CHO are used such as conditional reconfiguration, or Conditional Configuration (since the message that is stored and applied upon fulfillment of a condition is an RRCReconfiguration or RRCConnectionReconfiguration). Terminology wise, CHO can be interpreted in a broader sense.

The principle for the configuration may be the same with configuring triggering/execution condition(s) and a reconfiguration message to be applied when the triggering condition(s) are fulfilled.

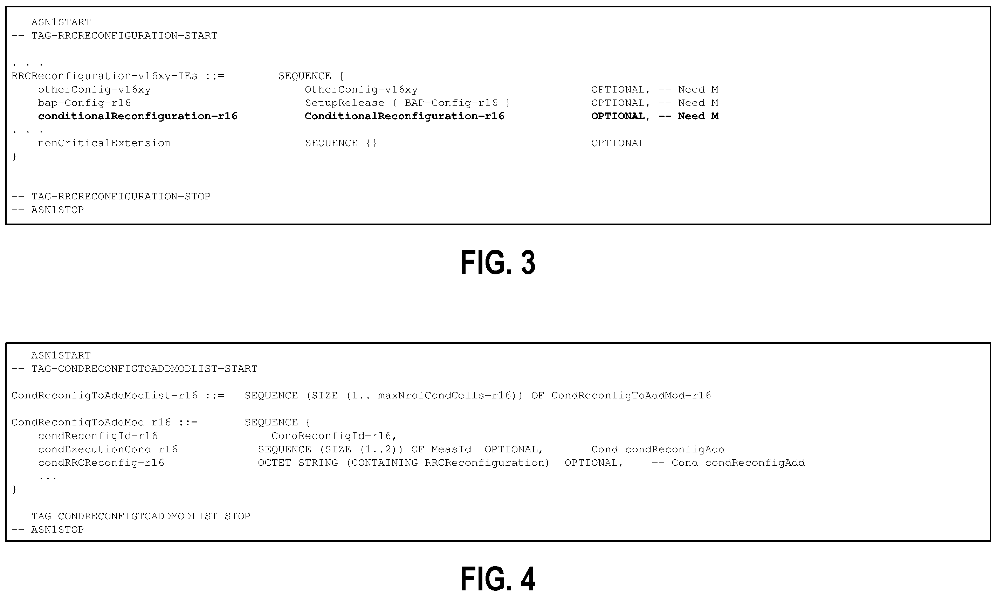

Some embodiments refer to a CHO configuration or the UE being configured with CHO that corresponds to a UE that has received an RRC Reconfiguration (e.g. an RRCReconfiguration message in NR format) including a CHO configuration as shown in the RRCReconfiguration message example in FIG. 3.

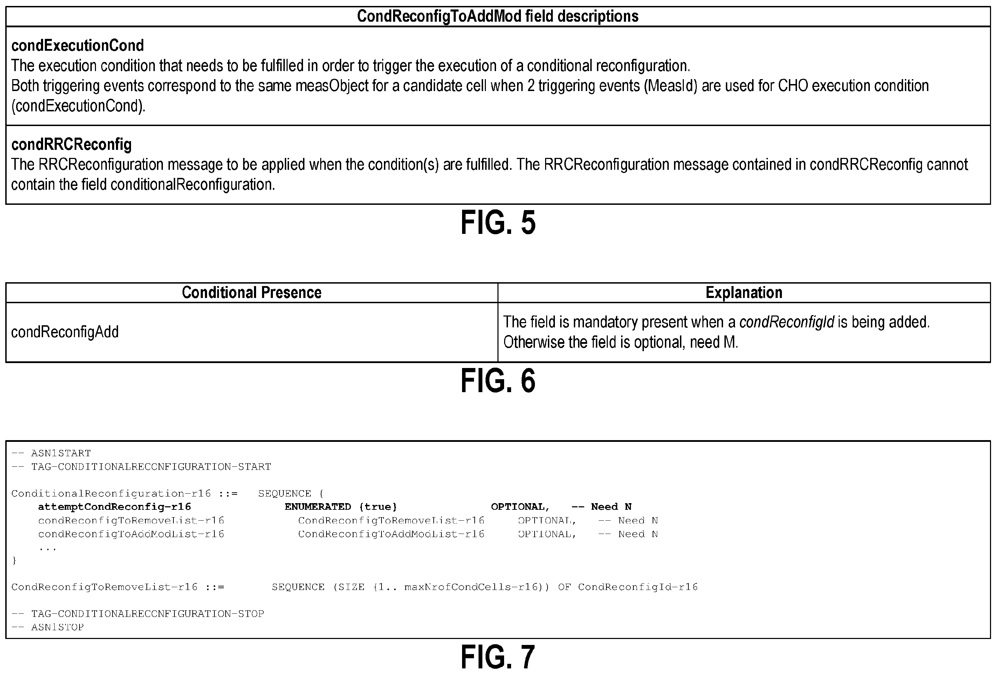

FIG. 4 illustrates an example of a CondReconfigToAddModList information element ("IE"). The CondReconfigToAddModList IE concerns a list of conditional reconfigurations to add or modify, with for each entry the condReconfigId and the associated condExecutionCond and condRRCReconfig. FIG. 5 is a table illustrating an example of CondReconfigToAddMod field descriptions. FIG. 6 is a table illustrating an example of an explanation for condReconfigAdd.

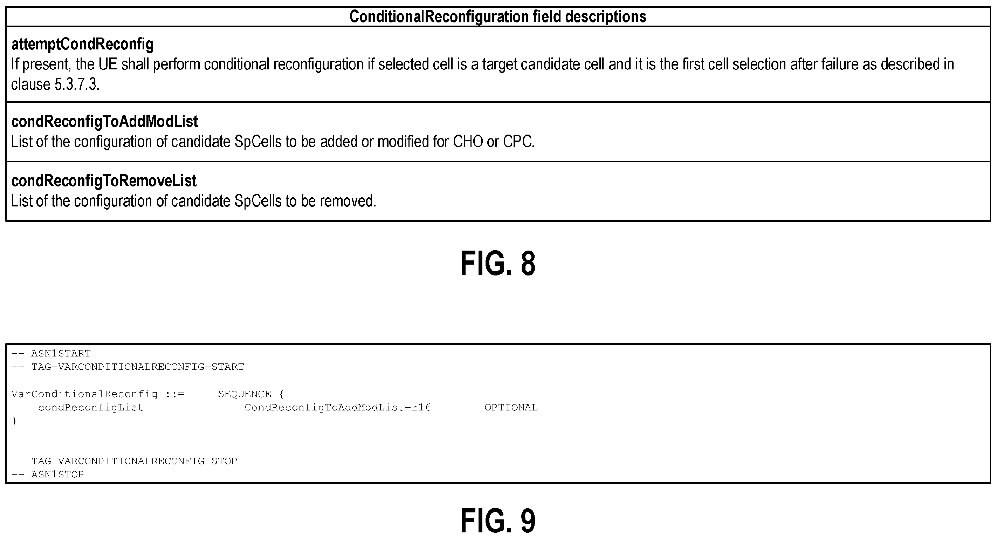

FIG. 7 illustrates an example of a ConditionalReconfiguration IE. The ConditionalReconfiguration IE is used to add, modify, and release the configuration of conditional reconfiguration. FIG. 8 is a table illustrating an example of ConditionalReconfiguration field descriptions.

FIG. 9 illustrates an example of a VarConditionalReconfig. The UE variable VarConditionalReconfig includes the accumulated configuration of the conditional handover or conditional PSCell change configurations including the pointers to conditional handover or conditional PSCell change execution condition (associated measId(s)) and the stored target candidate SpCell RRCReconfiguration.

As provided herein, the UE performing MR-DC release may perform one or more of the actions including: releasing SRB3, if configured; releasing measurement configuration associated with the Secondary Cell Group ("SCG"); releasing measurement configuration associated with the Secondary Node; if the UE is configured with NR SCG, releasing the SCG configuration by performing at least the actions of: resetting SCG MAC, if configured; for each RLC bearer that is part of the SCG configuration, performing RLC bearer release procedure; and releasing the SCG configuration. If the UE is configured with Conditional PSCell Change ("CPC"), operations may include releasing the CPC configuration; if the UE is configured with Conditional PSCell Addition ("CPA"), operations may include releasing the CPA configuration; and if the UE is configured with Conditional reconfiguration, operations may include releasing the CPA configuration.

A CPC configuration includes a configuration generated by a Secondary Node for PSCell Change based on a configured condition (e.g., something like an A3/A5 event). That is a type of conditional reconfiguration. The RRC Reconfiguration with the SCG configuration is provided to the UE but not applied upon reception, but only applied upon fulfillment of a condition (e.g., like an A3/A5 event). Deleting CPC may correspond to releasing/deleting a UE variable where the configurations are stored.

A CPA configuration includes a configuration generated by a Secondary Node for PSCell Addition based on a configured condition (e.g., something like an A3/A5 event). That is a type of conditional reconfiguration. The RRC Reconfiguration with the SCG configuration is provided to the UE but not applied upon reception, but only applied upon fulfillment of a condition (e.g., like an A2/A1 event). Deleting CPA may correspond to releasing/deleting a UE variable where the configurations are stored.

CHO, CPA and CPC can be considered as conditional reconfiguration(s). Deleting CPA/CPC/CHO may correspond to releasing/deleting a UE variable where the configurations are stored.

Examples of changes in the RRC specifications are described below.

In a first example, the UE initiates re-establishment and determines if it is configured with conditionalReconfiguration.

If the UE is not configured with conditionalReconfiguration, and the UE is configured with MR-DC, the UE performs MR-DC release and perform actions clause 5.3.5.10 of TS 38.331.

If the UE is configured with conditionalReconfiguration, the UE tries to perform CHO upon cell selection. If upon cell selection the selected cell is one of the candidate cells which the reconfigurationWithSync is included in the masterCellGroup in VarCondtionalReCconfig, the UE apply the stored condRRCReconfig associated to the selected cell and perform actions as specified in 5.3.5.3 of TS 38.331.

If upon cell selection the selected cell is not one of the candidate cells which the reconfigurationWithSync is included in the masterCellGroup in VarCondtionalReCconfig, and if the UE is configured with conditionalReconfiguration (i.e. configured with CHO), if the UE is configured by MR-DC, it performs MR-DC release, as specified in clause 5.3.5.10 of TS 38.331.

In other words, not all UEs would perform the MR-DC release procedure at the re-establishment initiation, which would prevent the state mismatch between the UE and the target candidate.

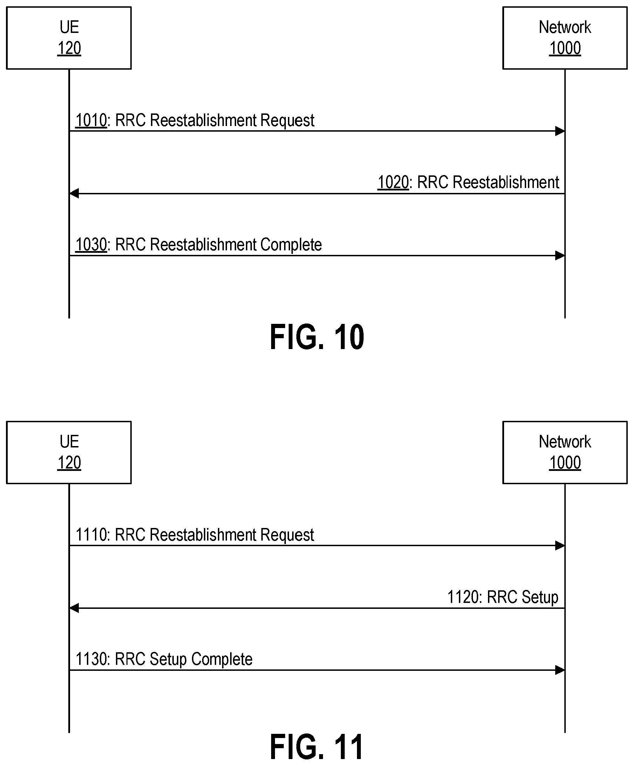

Brief reference is now made to FIGS. 10-11, which are data flow diagrams corresponding to RRC connection re-establishment successful and RRC re-establishment fallback to RRC establishment successful, according to some embodiments herein. As illustrated in FIG. 10, the UE 120 sends a RRCReestablishmentrequest (block 1010), receives RRCReestablishment (block 1020), and sends a RRCReestablishmentComplete message to the network 1000 (block 1030). As illustrated in FIG. 11, the UE 120 sends a RRCReestablishmentrequest (block 1110), receives an RRCSetup message from the network 1000 (block 1120), and sends a RRCSetupComplete message to the network 1000 (block 1130).

This procedure may re-establish the RRC connection. A UE in RRC_CONNECTED, for which AS security has been activated with SRB2 and at least one DRB setup, may initiate the procedure in order to continue the RRC connection. The connection re-establishment succeeds if the network is able to find and verify a valid UE context or, if the UE context cannot be retrieved, and the network responds with an RRCSetup according to clause 5.3.3.4 of TS 38.331.

The network may apply the procedure such that when AS security has been activated and the network retrieves or verifies the UE context: to re-activate AS security without changing algorithms; and to re-establish and resume the SRB1. When UE is re-establishing an RRC connection, and the network is not able to retrieve or verify the UE context: to discard the stored AS Context and release all radio bearers ("RBs"); and to fallback to establish a new RRC connection.

If AS security has not been activated, the UE shall not initiate the procedure but instead moves to RRC_IDLE directly, with release cause 'other'. If AS security has been activated, but SRB2 and at least one DRB are not setup, the UE does not initiate the procedure but instead moves to RRC_IDLE directly, with release cause 'RRC connection failure'.

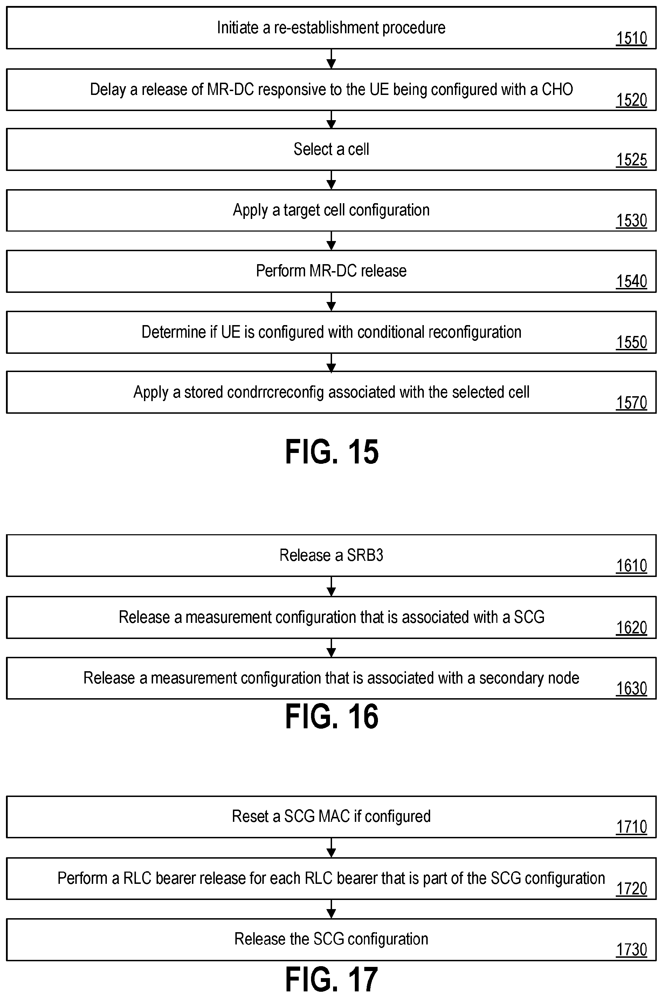

Operations of the communication device UE 1200 (implemented using the structure of the block diagram of FIG. 12) will now be discussed with reference to the flow charts of FIGS. 15-17 according to some embodiments of the present disclosure. For example, modules may be stored in memory 1205 of FIG. 12, and these modules may provide instructions so that when the instructions of a module are executed by respective communication device UE 1200 processing circuitry 1203, processing circuitry 1203 performs respective operations of the flow charts.

The flow chart of FIG. 15 illustrate operations performed by a UE capable of operating in MR-DC in a network according to some embodiments herein. At block 1510, processing circuitry 1203 initiates a re-establishment procedure. At block 1520, processing circuitry 1203 delays a release of MR-DC responsive to the UE being configured with a conditional handover, CHO.

At block 1525, processing circuitry 1203 selects a cell. In some embodiments, processing circuitry 1203 performs selects the cell before delaying the deletion of MR-DC.

At block 1530, processing circuitry 1203 applies the stored target cell configuration responsive to the UE being configured with the CHO having a stored target cell configuration for the selected cell.

At block 1540, processing circuitry 1203 performs a MR-DC release responsive to the cell selected in the UE being configured with the CHO that does not include a cell that the UE has a stored target cell configuration. In some embodiments, the stored target cell configuration corresponds to a ReconfigurationWithSync information element being included in the MasterCellGroup in VarConditionalReconfig.

In some embodiments, the MR-DC release is performed responsive to the cell selected in the UE being configured with the CHO that is not configured with an indication from the network that the UE can perform CHO upon re-establishment initiation.

Some embodiments provide that, in response to the UE being configured with conditional PSCell change, CPC, operations of performing the MR-DC release include releasing the CPC configuration. In some embodiments, the conditional PSCell change includes a configuration that is generated by a secondary node that is based on a configured condition.

Some embodiments provide that, in response to the UE being configured with conditional PSCell addition, CPA, performing the MR-DC release includes releasing the CPA configuration.

In some embodiments, the conditional PSCell addition includes a configuration that is generated by a secondary node that is based on a configured condition. In some embodiments, the CHO, CPA and CPC include conditional reconfigurations and deleting the CHO, CPA and/or CPC includes releasing and/or deleting a UE variable that corresponds to configuration storage.

At block 1550, processing circuitry 1203 determines if the UE is configured with conditional reconfiguration. In some embodiments, responsive to the UE not being configured with conditional reconfiguration and the UE being configured with MR-DC, the UE performs a MR-DC release. Some embodiments provide that, responsive to the UE being configured with conditional reconfiguration, the UE further attempts to perform CHO upon cell selection.

Some embodiments provide that initiating the re-establishment procedure is performed responsive to at least one of: detecting radio link failure of the MCG; re-configuration with sync failure of the MCG; mobility from NR failure; receiving an integrity check failure indication from lower layers concerning SRB1 or SRB2, except if the integrity check failure is detected on an RRCR establishment message; upon an RRC connection reconfiguration failure; detecting radio link failure for the SCG while MCG transmission is suspended; reconfiguration with sync failure of the SCG while MCG transmission is suspended; upon SCG change failure while MCG transmission in NE-DC; upon SCG configuration failure while MCG transmission is suspended; and upon integrity check failure indication from SCG lower layers concerning SRB3 while MCG is suspended.

At block 1570, processing circuitry 1203, responsive to the UE determining if it is configured with conditionalReconfiguration, applies a stored condRRCReconfig associated with the selected cell. In some embodiments, responsive to the UE determining the selected cell is not one of the candidate cells which the reconfigurationWithSync is included in the masterCellGroup in VarCondtionalReCconfig, the method includes performing the MR-DC release.

Some embodiments provide that performing the MR-DC release includes at least one of: releasing SRB3, if configured; releasing measurement configuration associated with the Secondary Cell Group ("SCG"); releasing measurement configuration associated with the Secondary Node; if the UE is configured with NR SCG, releasing the SCG configuration; that comprises at least the following actions: resetting SCG MAC, if configured; for each RLC bearer that is part of the SCG configuration, performing RLC bearer release procedure; releasing the SCG configuration; if the UE is configured with Conditional PSCell Change ("CPC"), releasing the CPC configuration; if the UE is configured with Conditional PSCell Addition ("CPA"), releasing the CPA configuration; and if the UE is configured with Conditional reconfiguration, releasing the CPA configuration.

Reference is now made to FIG. 16, which is a block diagram illustrating operations of performing a MR-DC release according to some embodiments herein. At block 1610, processing circuitry 1203 releases a SRB3 (e.g., a signaling radio bearer that is for specific RRC messages when the UE is in EN-DC, all using DCCH logical channel). At block 1620, processing circuitry 1203 releases a measurement configuration that is associated with a Secondary Cell group, SCG. At block 1630, processing circuitry releases a measurement configuration that is associated with a secondary node.

Reference is now made to FIG. 17, which is a block diagram illustrating operations performed of releasing the SCG configuration according to some embodiments herein. At block 1710, processing circuitry 1203 releases the SCG configuration by resetting a SCG MAC if configured. At block 1720, processing circuitry 1203 performs a radio link control, RLC, bearer release for each RLC bearer that is part of the SCG configuration. At block 1730, processing circuitry 1203 releases the SCG configuration.

Various operations of FIGS. 15-17 are optional. For example, in some embodiments, blocks 1525, 1530, 1540, 1550, and 1570 of FIG. 15; blocks 1610, 1620, and 1630 of FIG. 16; and blocks 1710, 1720, and 1730 of FIG. 17 may be optional.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

FIG. 18 illustrates a wireless network in accordance with some embodiments.

Although the subject matter described herein may be implemented in any appropriate type of system using any suitable components, the embodiments disclosed herein are described in relation to a wireless network, such as the example wireless network illustrated in FIG. 18. For simplicity, the wireless network of FIG. 18 only depicts network 4106, network nodes 4160 and 4160b, and WDs 4110, 4110b, and 4110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 4160 and wireless device ("WD") 4110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications ("GSM"), Universal Mobile Telecommunications System ("UMTS"), Long Term Evolution ("LTE"), and/or other suitable 2G, 3G, 4G, or 5G standards; wireless local area network ("WLAN") standards, such as the IEEE 802.11 standards; and/or any other appropriate wireless communication standard, such as the Worldwide Interoperability for Microwave Access ("WiMax"), Bluetooth, Z-Wave and/or ZigBee standards.

Network 4106 may comprise one or more backhaul networks, core networks, IP networks, public switched telephone networks ("PSTNs"), packet data networks, optical networks, wide-area networks ("WANs"), local area networks ("LANs"), wireless local area networks ("WLANs"), wired networks, wireless networks, metropolitan area networks, and other networks to enable communication between devices.

Network node 4160 and WD 4110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points ("APs") (e.g., radio access points), base stations ("BSs") (e.g., radio base stations, Node Bs, evolved Node Bs ("eNBs") and NR NodeBs ("gNBs")). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units ("RRUs"), sometimes referred to as Remote Radio Heads ("RRHs"). Such remote radio units may or may not be integrated with an antenna as an antenna integrated radio. Parts of a distributed radio base station may also be referred to as nodes in a distributed antenna system ("DAS"). Yet further examples of network nodes include multi-standard radio ("MSR") equipment such as MSR BSs, network controllers such as radio network controllers ("RNCs") or base station controllers ("BSCs"), base transceiver stations ("BTSs"), transmission points, transmission nodes, multi-cell/multicast coordination entities ("MCEs"), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIG. 18, network node 4160 includes processing circuitry 4170, device readable medium 4180, interface 4190, auxiliary equipment 4184, power source 4186, power circuitry 4187, and antenna 4162. Although network node 4160 illustrated in the example wireless network of FIG. 18 may represent a device that includes the illustrated combination of hardware components, other embodiments may comprise network nodes with different combinations of components. It is to be understood that a network node comprises any suitable combination of hardware and/or software needed to perform the tasks, features, functions, and methods disclosed herein. Moreover, while the components of network node 4160 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 4160 may be composed of multiple physically separate components (e.g., a NodeB component and a RNC component, or a BTS component and a BSC component, etc.), which may each have their own respective components. In certain scenarios in which network node 4160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 4160 may be configured to support multiple radio access technologies ("RATs"). In such embodiments, some components may be duplicated (e.g., separate device readable medium 4180 for the different RATs) and some components may be reused (e.g., the same antenna 4162 may be shared by the RATs). Network node 4160 may also include multiple sets of the various illustrated components for different wireless technologies integrated into network node 4160, such as, for example, GSM, WCDMA, LTE, NR, WiFi, or Bluetooth wireless technologies. These wireless technologies may be integrated into the same or different chip or set of chips and other components within network node 4160.

Processing circuitry 4170 is configured to perform any determining, calculating, or similar operations (e.g., certain obtaining operations) described herein as being provided by a network node. These operations performed by processing circuitry 4170 may include processing information obtained by processing circuitry 4170 by, for example, converting the obtained information into other information, comparing the obtained information or converted information to information stored in the network node, and/or performing one or more operations based on the obtained information or converted information, and as a result of said processing making a determination.

Processing circuitry 4170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 4160 components, such as device readable medium 4180, network node 4160 functionality. For example, processing circuitry 4170 may execute instructions stored in device readable medium 4180 or in memory within processing circuitry 4170. Such functionality may include providing any of the various wireless features, functions, or benefits discussed herein. In some embodiments, processing circuitry 4170 may include a system on a chip ("SOC").

In some embodiments, processing circuitry 4170 may include one or more of radio frequency ("RF") transceiver circuitry 4172 and baseband processing circuitry 4174. In some embodiments, RF transceiver circuitry 4172 and baseband processing circuitry 4174 may be on separate chips (or sets of chips), boards, or units, such as radio units and digital units. In alternative embodiments, part or all of RF transceiver circuitry 4172 and baseband processing circuitry 4174 may be on the same chip or set of chips, boards, or units

In certain embodiments, some or all of the functionality described herein as being provided by a network node, base station, eNB or other such network device may be performed by processing circuitry 4170 executing instructions stored on device readable medium 4180 or memory within processing circuitry 4170. In alternative embodiments, some or all of the functionality may be provided by processing circuitry 4170 without executing instructions stored on a separate or discrete device readable medium, such as in a hard-wired manner. In any of those embodiments, whether executing instructions stored on a device readable storage medium or not, processing circuitry 4170 can be configured to perform the described functionality. The benefits provided by such functionality are not limited to processing circuitry 4170 alone or to other components of network node 4160, but are enjoyed by network node 4160 as a whole, and/or by end users and the wireless network generally.

Device readable medium 4180 may comprise any form of volatile or non-volatile computer readable memory including, without limitation, persistent storage, solid-state memory, remotely mounted memory, magnetic media, optical media, random access memory ("RAM"), read-only memory ("ROM"), mass storage media (for example, a hard disk), removable storage media (for example, a flash drive, a Compact Disk ("CD") or a Digital Video Disk ("DVD")), and/or any other volatile or non-volatile, non-transitory device readable and/or computer-executable memory devices that store information, data, and/or instructions that may be used by processing circuitry 4170. Device readable medium 4180 may store any suitable instructions, data, or information, including a computer program, software, an application including one or more of logic, rules, code, tables, etc. and/or other instructions capable of being executed by processing circuitry 4170 and, utilized by network node 4160. Device readable medium 4180 may be used to store any calculations made by processing circuitry 4170 and/or any data received via interface 4190. In some embodiments, processing circuitry 4170 and device readable medium 4180 may be considered to be integrated.

Interface 4190 is used in the wired or wireless communication of signalling and/or data between network node 4160, network 4106, and/or WDs 4110. As illustrated, interface 4190 comprises port(s)/terminal(s) 4194 to send and receive data, for example to and from network 4106 over a wired connection. Interface 4190 also includes radio front end circuitry 4192 that may be coupled to, or in certain embodiments a part of, antenna 4162. Radio front end circuitry 4192 comprises filters 4198 and amplifiers 4196. Radio front end circuitry 4192 may be connected to antenna 4162 and processing circuitry 4170. Radio front end circuitry may be configured to condition signals communicated between antenna 4162 and processing circuitry 4170. Radio front end circuitry 4192 may receive digital data that is to be sent out to other network nodes or WDs via a wireless connection. Radio front end circuitry 4192 may convert the digital data into a radio signal having the appropriate channel and bandwidth parameters using a combination of filters 4198 and/or amplifiers 4196. The radio signal may then be transmitted via antenna 4162. Similarly, when receiving data, antenna 4162 may collect radio signals which are then converted into digital data by radio front end circuitry 4192. The digital data may be passed to processing circuitry 4170. In other embodiments, the interface may comprise different components and/or different combinations of components.

In certain alternative embodiments, network node 4160 may not include separate radio front end circuitry 4192, instead, processing circuitry 4170 may comprise radio front end circuitry and may be connected to antenna 4162 without separate radio front end circuitry 4192. Similarly, in some embodiments, all or some of RF transceiver circuitry 4172 may be considered a part of interface 4190. In still other embodiments, interface 4190 may include one or more ports or terminals 4194, radio front end circuitry 4192, and RF transceiver circuitry 4172, as part of a radio unit (not shown), and interface 4190 may communicate with baseband processing circuitry 4174, which is part of a digital unit (not shown).

Antenna 4162 may include one or more antennas, or antenna arrays, configured to send and/or receive wireless signals. Antenna 4162 may be coupled to radio front end circuitry 4192 and may be any type of antenna capable of transmitting and receiving data and/or signals wirelessly. In some embodiments, antenna 4162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 4162 may be separate from network node 4160 and may be connectable to network node 4160 through an interface or port.

Antenna 4162, interface 4190, and/or processing circuitry 4170 may be configured to perform any receiving operations and/or certain obtaining operations described herein as being performed by a network node. Any information, data and/or signals may be received from a wireless device, another network node and/or any other network equipment. Similarly, antenna 4162, interface 4190, and/or processing circuitry 4170 may be configured to perform any transmitting operations described herein as being performed by a network node. Any information, data and/or signals may be transmitted to a wireless device, another network node and/or any other network equipment.

Power circuitry 4187 may comprise, or be coupled to, power management circuitry and is configured to supply the components of network node 4160 with power for performing the functionality described herein. Power circuitry 4187 may receive power from power source 4186. Power source 4186 and/or power circuitry 4187 may be configured to provide power to the various components of network node 4160 in a form suitable for the respective components (e.g., at a voltage and current level needed for each respective component). Power source 4186 may either be included in, or external to, power circuitry 4187 and/or network node 4160. For example, network node 4160 may be connectable to an external power source (e.g., an electricity outlet) via an input circuitry or interface such as an electrical cable, whereby the external power source supplies power to power circuitry 4187. As a further example, power source 4186 may comprise a source of power in the form of a battery or battery pack which is connected to, or integrated in, power circuitry 4187. The battery may provide backup power should the external power source fail. Other types of power sources, such as photovoltaic devices, may also be used.

Alternative embodiments of network node 4160 may include additional components beyond those shown in FIG. 18 that may be responsible for providing certain aspects of the network node's functionality, including any of the functionality described herein and/or any functionality necessary to support the subject matter described herein. For example, network node 4160 may include user interface equipment to allow input of information into network node 4160 and to allow output of information from network node 4160. This may allow a user to perform diagnostic, maintenance, repair, and other administrative functions for network node 4160.

As used herein, wireless device ("WD") refers to a device capable, configured, arranged and/or operable to communicate wirelessly with network nodes and/or other wireless devices. Unless otherwise noted, the term WD may be used interchangeably herein with user equipment ("UE"). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP ("VoIP") phone, a wireless local loop phone, a desktop computer, a personal digital assistant ("PDA"), a wireless cameras, a gaming console or device, a music storage device, a playback appliance, a wearable terminal device, a wireless endpoint, a mobile station, a tablet, a laptop, a laptop-embedded equipment ("LEE"), a laptop-mounted equipment ("LME"), a smart device, a wireless customer-premise equipment ("CPE"). a vehicle-mounted wireless terminal device, etc. A WD may support device-to-device ("D2D") communication, for example by implementing a 3GPP standard for sidelink communication, vehicle-to-vehicle ("V2V"), vehicle-to-infrastructure ("V2I"), vehicle-to-everything ("V2X") and may in this case be referred to as a D2D communication device. As yet another specific example, in an Internet of Things ("IoT") scenario, a WD may represent a machine or other device that performs monitoring and/or measurements, and transmits the results of such monitoring and/or measurements to another WD and/or a network node. The WD may in this case be a machine-to-machine ("M2M") device, which may in a 3GPP context be referred to as an MTC device. As one particular example, the WD may be a UE implementing the 3GPP narrow band internet of things ("NB-IoT") standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 4110 includes antenna 4111, interface 4114, processing circuitry 4120, device readable medium 4130, user interface equipment 4132, auxiliary equipment 4134, power source 4136 and power circuitry 4137. WD 4110 may include multiple sets of one or more of the illustrated components for different wireless technologies supported by WD 4110, such as, for example, GSM, WCDMA, LTE, NR, WiFi, WiMAX, or Bluetooth wireless technologies, just to mention a few. These wireless technologies may be integrated into the same or different chips or set of chips as other components within WD 4110.

Antenna 4111 may include one or more antennas or antenna arrays, configured to send and/or receive wireless signals, and is connected to interface 4114. In certain alternative embodiments, antenna 4111 may be separate from WD 4110 and be connectable to WD 4110 through an interface or port. Antenna 4111, interface 4114, and/or processing circuitry 4120 may be configured to perform any receiving or transmitting operations described herein as being performed by a WD. Any information, data and/or signals may be received from a network node and/or another WD. In some embodiments, radio front end circuitry and/or antenna 4111 may be considered an interface.

As illustrated, interface 4114 comprises radio front end circuitry 4112 and antenna 4111. Radio front end circuitry 4112 comprise one or more filters 4118 and amplifiers 4116. Radio front end circuitry 4112 is connected to antenna 4111 and processing circuitry 4120, and is configured to condition signals communicated between antenna 4111 and processing circuitry 4120. Radio front end circuitry 4112 may be coupled to or a part of antenna 4111. In some embodiments, WD 4110 may not include separate radio front end circuitry 4112; rather, processing circuitry 4120 may comprise radio front end circuitry and may be connected to antenna 4111. Similarly, in some embodiments, some or all of RF transceiver circuitry 4122 may be considered a part of interface 4114. Radio front end circuitry 4112 may receive digital data that is to be sent out to other network nodes or WDs via a wireless connection. Radio front end circuitry 4112 may convert the digital data into a radio signal having the appropriate channel and bandwidth parameters using a combination of filters 4118 and/or amplifiers 4116. The radio signal may then be transmitted via antenna 4111. Similarly, when receiving data, antenna 4111 may collect radio signals which are then converted into digital data by radio front end circuitry 4112. The digital data may be passed to processing circuitry 4120. In other embodiments, the interface may comprise different components and/or different combinations of components.

Processing circuitry 4120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 4110 components, such as device readable medium 4130, WD 4110 functionality. Such functionality may include providing any of the various wireless features or benefits discussed herein. For example, processing circuitry 4120 may execute instructions stored in device readable medium 4130 or in memory within processing circuitry 4120 to provide the functionality disclosed herein.

As illustrated, processing circuitry 4120 includes one or more of RF transceiver circuitry 4122, baseband processing circuitry 4124, and application processing circuitry 4126. In other embodiments, the processing circuitry may comprise different components and/or different combinations of components. In certain embodiments processing circuitry 4120 of WD 4110 may comprise a SOC. In some embodiments, RF transceiver circuitry 4122, baseband processing circuitry 4124, and application processing circuitry 4126 may be on separate chips or sets of chips. In alternative embodiments, part or all of baseband processing circuitry 4124 and application processing circuitry 4126 may be combined into one chip or set of chips, and RF transceiver circuitry 4122 may be on a separate chip or set of chips. In still alternative embodiments, part or all of RF transceiver circuitry 4122 and baseband processing circuitry 4124 may be on the same chip or set of chips, and application processing circuitry 4126 may be on a separate chip or set of chips. In yet other alternative embodiments, part or all of RF transceiver circuitry 4122, baseband processing circuitry 4124, and application processing circuitry 4126 may be combined in the same chip or set of chips. In some embodiments, RF transceiver circuitry 4122 may be a part of interface 4114. RF transceiver circuitry 4122 may condition RF signals for processing circuitry 4120.

In certain embodiments, some or all of the functionality described herein as being performed by a WD may be provided by processing circuitry 4120 executing instructions stored on device readable medium 4130, which in certain embodiments may be a computer-readable storage medium. In alternative embodiments, some or all of the functionality may be provided by processing circuitry 4120 without executing instructions stored on a separate or discrete device readable storage medium, such as in a hard-wired manner. In any of those particular embodiments, whether executing instructions stored on a device readable storage medium or not, processing circuitry 4120 can be configured to perform the described functionality. The benefits provided by such functionality are not limited to processing circuitry 4120 alone or to other components of WD 4110, but are enjoyed by WD 4110 as a whole, and/or by end users and the wireless network generally.

Processing circuitry 4120 may be configured to perform any determining, calculating, or similar operations (e.g., certain obtaining operations) described herein as being performed by a WD. These operations, as performed by processing circuitry 4120, may include processing information obtained by processing circuitry 4120 by, for example, converting the obtained information into other information, comparing the obtained information or converted information to information stored by WD 4110, and/or performing one or more operations based on the obtained information or converted information, and as a result of said processing making a determination.

Device readable medium 4130 may be operable to store a computer program, software, an application including one or more of logic, rules, code, tables, etc. and/or other instructions capable of being executed by processing circuitry 4120. Device readable medium 4130 may include computer memory (e.g., Random Access Memory ("RAM") or Read Only Memory ("ROM")), mass storage media (e.g., a hard disk), removable storage media (e.g., a Compact Disk ("CD") or a Digital Video Disk ("DVD")), and/or any other volatile or non-volatile, non-transitory device readable and/or computer executable memory devices that store information, data, and/or instructions that may be used by processing circuitry 4120. In some embodiments, processing circuitry 4120 and device readable medium 4130 may be considered to be integrated.

User interface equipment 4132 may provide components that allow for a human user to interact with WD 4110. Such interaction may be of many forms, such as visual, audial, tactile, etc. User interface equipment 4132 may be operable to produce output to the user and to allow the user to provide input to WD 4110. The type of interaction may vary depending on the type of user interface equipment 4132 installed in WD 4110. For example, if WD 4110 is a smart phone, the interaction may be via a touch screen; if WD 4110 is a smart meter, the interaction may be through a screen that provides usage (e.g., the number of gallons used) or a speaker that provides an audible alert (e.g., if smoke is detected). User interface equipment 4132 may include input interfaces, devices and circuits, and output interfaces, devices and circuits. User interface equipment 4132 is configured to allow input of information into WD 4110, and is connected to processing circuitry 4120 to allow processing circuitry 4120 to process the input information. User interface equipment 4132 may include, for example, a microphone, a proximity or other sensor, keys/buttons, a touch display, one or more cameras, a USB port, or other input circuitry. User interface equipment 4132 is also configured to allow output of information from WD 4110, and to allow processing circuitry 4120 to output information from WD 4110. User interface equipment 4132 may include, for example, a speaker, a display, vibrating circuitry, a USB port, a headphone interface, or other output circuitry. Using one or more input and output interfaces, devices, and circuits, of user interface equipment 4132, WD 4110 may communicate with end users and/or the wireless network, and allow them to benefit from the functionality described herein.

Auxiliary equipment 4134 is operable to provide more specific functionality which may not be generally performed by WDs. This may comprise specialized sensors for doing measurements for various purposes, interfaces for additional types of communication such as wired communications etc. The inclusion and type of components of auxiliary equipment 4134 may vary depending on the embodiment and/or scenario.

Power source 4136 may, in some embodiments, be in the form of a battery or battery pack. Other types of power sources, such as an external power source (e.g., an electricity outlet), photovoltaic devices or power cells, may also be used. WD 4110 may further comprise power circuitry 4137 for delivering power from power source 4136 to the various parts of WD 4110 which need power from power source 4136 to carry out any functionality described or indicated herein. Power circuitry 4137 may in certain embodiments comprise power management circuitry. Power circuitry 4137 may additionally or alternatively be operable to receive power from an external power source; in which case WD 4110 may be connectable to the external power source (such as an electricity outlet) via input circuitry or an interface such as an electrical power cable. Power circuitry 4137 may also in certain embodiments be operable to deliver power from an external power source to power source 4136. This may be, for example, for the charging of power source 4136. Power circuitry 4137 may perform any formatting, converting, or other modification to the power from power source 4136 to make the power suitable for the respective components of WD 4110 to which power is supplied.

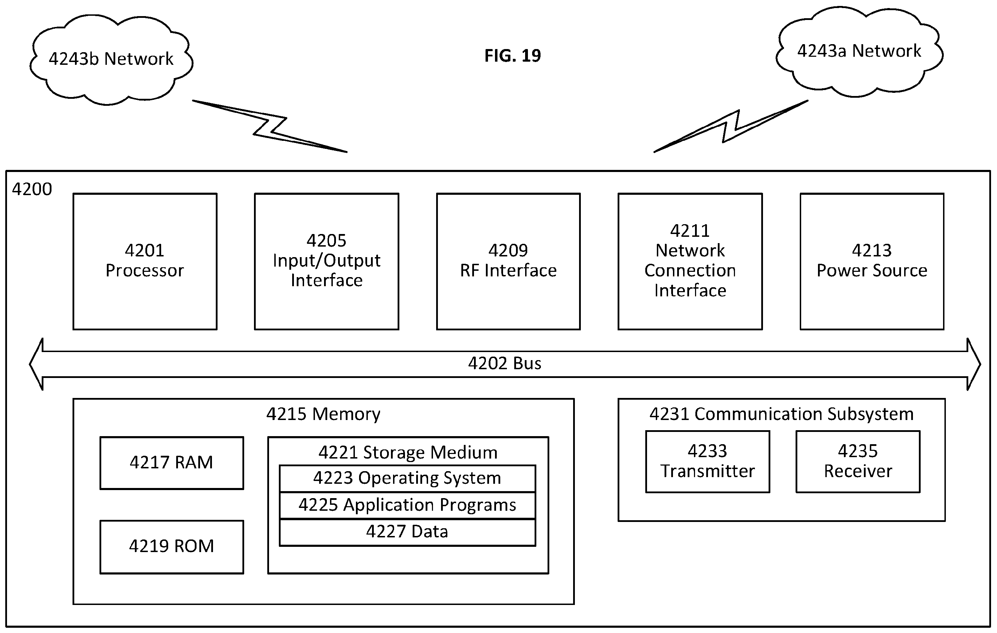

FIG. 19 illustrates a user Equipment in accordance with some embodiments.

FIG. 19 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 42200 may be any UE identified by the 3rd Generation Partnership Project ("3GPP"), including a NB-IoT UE, a machine type communication ("MTC") UE, and/or an enhanced MTC ("eMTC") UE. UE 4200, as illustrated in FIG. 19, is one example of a WD configured for communication in accordance with one or more communication standards promulgated by the 3rd Generation Partnership Project ("3GPP"), such as 3GPP's GSM, UMTS, LTE, and/or 5G standards. As mentioned previously, the term WD and UE may be used interchangeable. Accordingly, although FIG. 19 is a UE, the components discussed herein are equally applicable to a WD, and vice-versa.

In FIG. 19, UE 4200 includes processing circuitry 4201 that is operatively coupled to input/output interface 4205, radio frequency ("RF") interface 4209, network connection interface 4211, memory 4215 including random access memory ("RAM") 4217, read-only memory ("ROM") 4219, and storage medium 4221 or the like, communication subsystem 4231, power source 4213, and/or any other component, or any combination thereof. Storage medium 4221 includes operating system 4223, application program 4225, and data 4227. In other embodiments, storage medium 4221 may include other similar types of information. Certain UEs may utilize all of the components shown in FIG. 19, or only a subset of the components. The level of integration between the components may vary from one UE to another UE. Further, certain UEs may contain multiple instances of a component, such as multiple processors, memories, transceivers, transmitters, receivers, etc.

In FIG. 19, processing circuitry 4201 may be configured to process computer instructions and data. Processing circuitry 4201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor ("DSP"), together with appropriate software; or any combination of the above. For example, the processing circuitry 4201 may include two central processing units ("CPUs"). Data may be information in a form suitable for use by a computer.

In the depicted embodiment, input/output interface 4205 may be configured to provide a communication interface to an input device, output device, or input and output device. UE 4200 may be configured to use an output device via input/output interface 4205. An output device may use the same type of interface port as an input device. For example, a USB port may be used to provide input to and output from UE 4200. The output device may be a speaker, a sound card, a video card, a display, a monitor, a printer, an actuator, an emitter, a smartcard, another output device, or any combination thereof. UE 4200 may be configured to use an input device via input/output interface 4205 to allow a user to capture information into UE 4200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIG. 19, RF interface 4209 may be configured to provide a communication interface to RF components such as a transmitter, a receiver, and an antenna. Network connection interface 4211 may be configured to provide a communication interface to network 4243a. Network 4243a may encompass wired and/or wireless networks such as a local-area network ("LAN"), a wide-area network ("WAN"), a computer network, a wireless network, a telecommunications network, another like network or any combination thereof. For example, network 4243a may comprise a Wi-Fi network. Network connection interface 4211 may be configured to include a receiver and a transmitter interface used to communicate with one or more other devices over a communication network according to one or more communication protocols, such as Ethernet, TCP/IP, SONET, ATM, or the like. Network connection interface 4211 may implement receiver and transmitter functionality appropriate to the communication network links (e.g., optical, electrical, and the like). The transmitter and receiver functions may share circuit components, software or firmware, or alternatively may be implemented separately.

RAM 4217 may be configured to interface via bus 4202 to processing circuitry 4201 to provide storage or caching of data or computer instructions during the execution of software programs such as the operating system, application programs, and device drivers. ROM 4219 may be configured to provide computer instructions or data to processing circuitry 4201. For example, ROM 4219 may be configured to store invariant low-level system code or data for basic system functions such as basic input and output ("I/O"), startup, or reception of keystrokes from a keyboard that are stored in a non-volatile memory. Storage medium 4221 may be configured to include memory such as RAM, ROM, programmable read-only memory ("PROM"), erasable programmable read-only memory ("EPROM"), electrically erasable programmable read-only memory ("EEPROM"), magnetic disks, optical disks, floppy disks, hard disks, removable cartridges, or flash drives. In one example, storage medium 4221 may be configured to include operating system 4223, application program 4225 such as a web browser application, a widget or gadget engine or another application, and data file 4227. Storage medium 4221 may store, for use by UE 4200, any of a variety of various operating systems or combinations of operating systems.

Storage medium 4221 may be configured to include a number of physical drive units, such as redundant array of independent disks ("RAID"), floppy disk drive, flash memory, USB flash drive, external hard disk drive, thumb drive, pen drive, key drive, high-density digital versatile disc ("HD-DVD") optical disc drive, internal hard disk drive, Blu-Ray optical disc drive, holographic digital data storage ("HDDS") optical disc drive, external mini-dual in-line memory module ("DIMM"), synchronous dynamic random access memory ("SDRAM"), external micro-DIMM SDRAM, smartcard memory such as a subscriber identity module or a removable user identity ("SIM/RUIM") module, other memory, or any combination thereof. Storage medium 4221 may allow UE 4200 to access computer-executable instructions, application programs or the like, stored on transitory or non-transitory memory media, to off-load data, or to upload data. An article of manufacture, such as one utilizing a communication system may be tangibly embodied in storage medium 4221, which may comprise a device readable medium.

In FIG. 19, processing circuitry 4201 may be configured to communicate with network 4243b using communication subsystem 4231. Network 4243a and network 4243b may be the same network or networks or different network or networks. Communication subsystem 4231 may be configured to include one or more transceivers used to communicate with network 4243b. For example, communication subsystem 4231 may be configured to include one or more transceivers used to communicate with one or more remote transceivers of another device capable of wireless communication such as another WD, UE, or base station of a radio access network ("RAN") according to one or more communication protocols, such as IEEE 802.11, CDMA, WCDMA, GSM, LTE, UTRAN, WiMax, or the like. Each transceiver may include transmitter 4233 and/or receiver 4235 to implement transmitter or receiver functionality, respectively, appropriate to the RAN links (e.g., frequency allocations and the like). Further, transmitter 4233 and receiver 4235 of each transceiver may share circuit components, software or firmware, or alternatively may be implemented separately.

In the illustrated embodiment, the communication functions of communication subsystem 4231 may include data communication, voice communication, multimedia communication, short-range communications such as Bluetooth, near-field communication, location-based communication such as the use of the global positioning system ("GPS") to determine a location, another like communication function, or any combination thereof. For example, communication subsystem 4231 may include cellular communication, Wi-Fi communication, Bluetooth communication, and GPS communication. Network 4243b may encompass wired and/or wireless networks such as a local-area network ("LAN"), a wide-area network ("WAN"), a computer network, a wireless network, a telecommunications network, another like network or any combination thereof. For example, network 4243b may be a cellular network, a Wi-Fi network, and/or a near-field network. Power source 4213 may be configured to provide alternating current ("AC") or direct current ("DC") power to components of UE 4200.

The features, benefits and/or functions described herein may be implemented in one of the components of UE 4200 or partitioned across multiple components of UE 4200. Further, the features, benefits, and/or functions described herein may be implemented in any combination of hardware, software or firmware. In one example, communication subsystem 4231 may be configured to include any of the components described herein. Further, processing circuitry 4201 may be configured to communicate with any of such components over bus 4202. In another example, any of such components may be represented by program instructions stored in memory that when executed by processing circuitry 4201 perform the corresponding functions described herein. In another example, the functionality of any of such components may be partitioned between processing circuitry 4201 and communication subsystem 4231. In another example, the non-computationally intensive functions of any of such components may be implemented in software or firmware and the computationally intensive functions may be implemented in hardware.

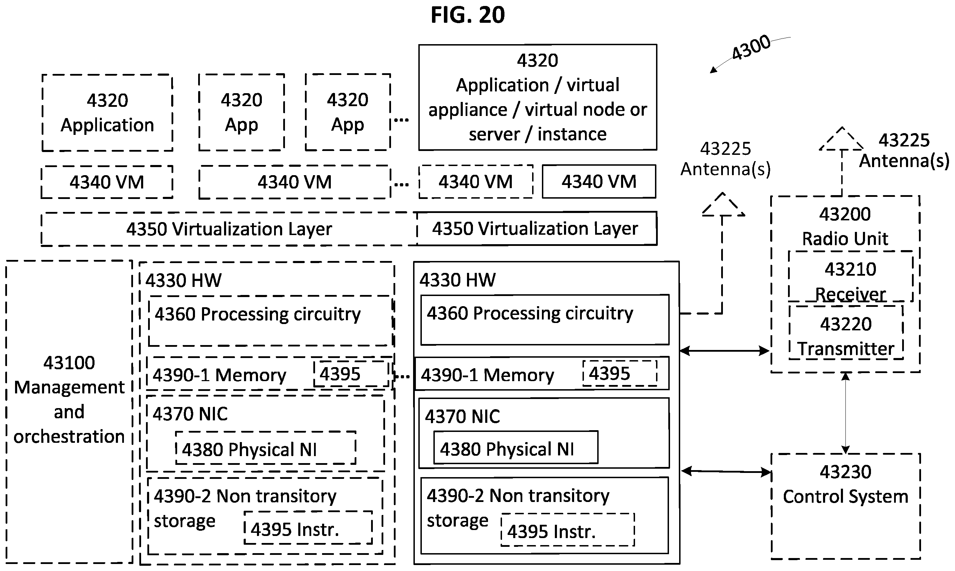

FIG. 20 illustrates a virtualization environment in accordance with some embodiments.

FIG. 20 is a schematic block diagram illustrating a virtualization environment 4300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 4300 hosted by one or more of hardware nodes 4330. Further, in embodiments in which the virtual node is not a radio access node or does not require radio connectivity (e.g., a core network node), then the network node may be entirely virtualized.

The functions may be implemented by one or more applications 4320 (which may alternatively be called software instances, virtual appliances, network functions, virtual nodes, virtual network functions, etc.) operative to implement some of the features, functions, and/or benefits of some of the embodiments disclosed herein. Applications 4320 are run in virtualization environment 4300 which provides hardware 4330 comprising processing circuitry 4360 and memory 4390. Memory 4390 contains instructions 4395 executable by processing circuitry 4360 whereby application 4320 is operative to provide one or more of the features, benefits, and/or functions disclosed herein.

Virtualization environment 4300, comprises general-purpose or special-purpose network hardware devices 4330 comprising a set of one or more processors or processing circuitry 4360, which may be commercial off-the-shelf ("COTS") processors, dedicated Application Specific Integrated Circuits ("ASICs"), or any other type of processing circuitry including digital or analog hardware components or special purpose processors. Each hardware device may comprise memory 4390-1 which may be non-persistent memory for temporarily storing instructions 4395 or software executed by processing circuitry 4360. Each hardware device may comprise one or more network interface controllers ("NICs") 4370, also known as network interface cards, which include physical network interface 4380. Each hardware device may also include non-transitory, persistent, machine-readable storage media 4390-2 having stored therein software 4395 and/or instructions executable by processing circuitry 4360. Software 4395 may include any type of software including software for instantiating one or more virtualization layers 4350 (also referred to as hypervisors), software to execute virtual machines 4340 as well as software allowing it to execute functions, features and/or benefits described in relation with some embodiments described herein.

Virtual machines 4340 comprise virtual processing, virtual memory, virtual networking or interface and virtual storage, and may be run by a corresponding virtualization layer 4350 or hypervisor. Different embodiments of the instance of virtual appliance 4320 may be implemented on one or more of virtual machines 4340, and the implementations may be made in different ways.

During operation, processing circuitry 4360 executes software 4395 to instantiate the hypervisor or virtualization layer 4350, which may sometimes be referred to as a virtual machine monitor ("VMM"). Virtualization layer 4350 may present a virtual operating platform that appears like networking hardware to virtual machine 4340.

As shown in FIG. 20, hardware 4330 may be a standalone network node with generic or specific components. Hardware 4330 may comprise antenna 43225 and may implement some functions via virtualization. Alternatively, hardware 4330 may be part of a larger cluster of hardware (e.g. such as in a data center or customer premise equipment ("CPE")) where many hardware nodes work together and are managed via management and orchestration ("MANO") 43100, which, among others, oversees lifecycle management of applications 4320.

Virtualization of the hardware is in some contexts referred to as network function virtualization ("NFV"). NFV may be used to consolidate many network equipment types onto industry standard high volume server hardware, physical switches, and physical storage, which can be located in data centers, and customer premise equipment.

In the context of NFV, virtual machine 4340 may be a software implementation of a physical machine that runs programs as if they were executing on a physical, non-virtualized machine. Each of virtual machines 4340, and that part of hardware 4330 that executes that virtual machine, be it hardware dedicated to that virtual machine and/or hardware shared by that virtual machine with others of the virtual machines 4340, forms a separate virtual network elements ("VNE").

Still in the context of NFV, Virtual Network Function ("VNF") is responsible for handling specific network functions that run in one or more virtual machines 4340 on top of hardware networking infrastructure 4330 and corresponds to application 4320 in FIG. 20.

In some embodiments, one or more radio units 43200 that each include one or more transmitters 43220 and one or more receivers 43210 may be coupled to one or more antennas 43225. Radio units 43200 may communicate directly with hardware nodes 4330 via one or more appropriate network interfaces and may be used in combination with the virtual components to provide a virtual node with radio capabilities, such as a radio access node or a base station.

In some embodiments, some signalling can be effected with the use of control system 43230 which may alternatively be used for communication between the hardware nodes 4330 and radio units 43200.

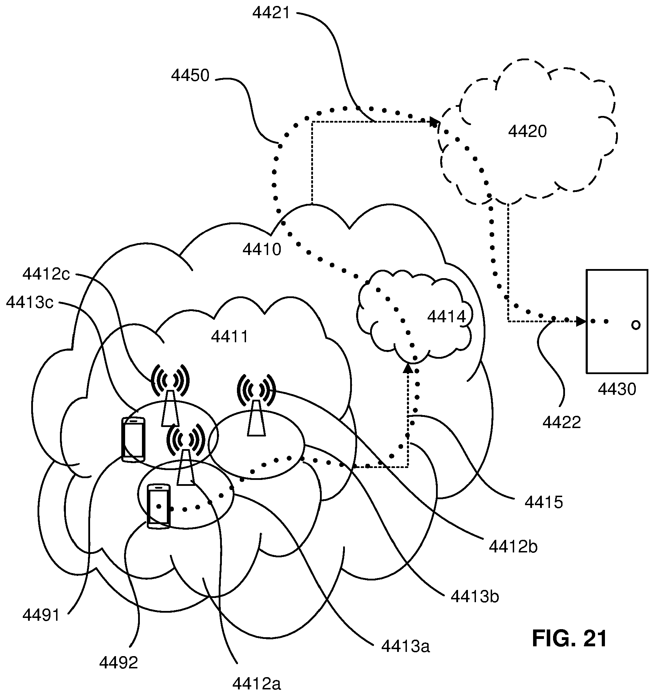

FIG. 21 illustrates a telecommunication network connected via an intermediate network to a host computer in accordance with some embodiments.

With reference to FIG. 21, in accordance with an embodiment, a communication system includes telecommunication network 4410, such as a 3GPP-type cellular network, which comprises access network 4411, such as a radio access network, and core network 4414. Access network 4411 comprises a plurality of base stations 4412a, 4412b, 4412c, such as NBs, eNBs, gNBs or other types of wireless access points, each defining a corresponding coverage area 4413a, 4413b, 4413c. Each base station 4412a, 4412b, 4412c is connectable to core network 4414 over a wired or wireless connection 4415. A first UE 4491 located in coverage area 4413c is configured to wirelessly connect to, or be paged by, the corresponding base station 4412c. A second UE 4492 in coverage area 4413a is wirelessly connectable to the corresponding base station 4412a. While a plurality of UEs 4491, 4492 are illustrated in this example, the disclosed embodiments are equally applicable to a situation where a sole UE is in the coverage area or where a sole UE is connecting to the corresponding base station 4412.

Telecommunication network 4410 is itself connected to host computer 4430, which may be embodied in the hardware and/or software of a standalone server, a cloud-implemented server, a distributed server or as processing resources in a server farm. Host computer 4430 may be under the ownership or control of a service provider, or may be operated by the service provider or on behalf of the service provider. Connections 4421 and 4422 between telecommunication network 4410 and host computer 4430 may extend directly from core network 4414 to host computer 4430 or may go via an optional intermediate network 4420. Intermediate network 4420 may be one of, or a combination of more than one of, a public, private or hosted network; intermediate network 4420, if any, may be a backbone network or the Internet; in particular, intermediate network 4420 may comprise two or more sub-networks (not shown).

The communication system of FIG. 21 as a whole enables connectivity between the connected UEs 4491, 4492 and host computer 4430. The connectivity may be described as an over-the-top ("OTT") connection 4450. Host computer 4430 and the connected UEs 4491, 4492 are configured to communicate data and/or signaling via OTT connection 4450, using access network 4411, core network 4414, any intermediate network 4420 and possible further infrastructure (not shown) as intermediaries. OTT connection 4450 may be transparent in the sense that the participating communication devices through which OTT connection 4450 passes are unaware of routing of uplink and downlink communications. For example, base station 4412 may not or need not be informed about the past routing of an incoming downlink communication with data originating from host computer 4430 to be forwarded (e.g., handed over) to a connected UE 4491. Similarly, base station 4412 need not be aware of the future routing of an outgoing uplink communication originating from the UE 4491 towards the host computer 4430.

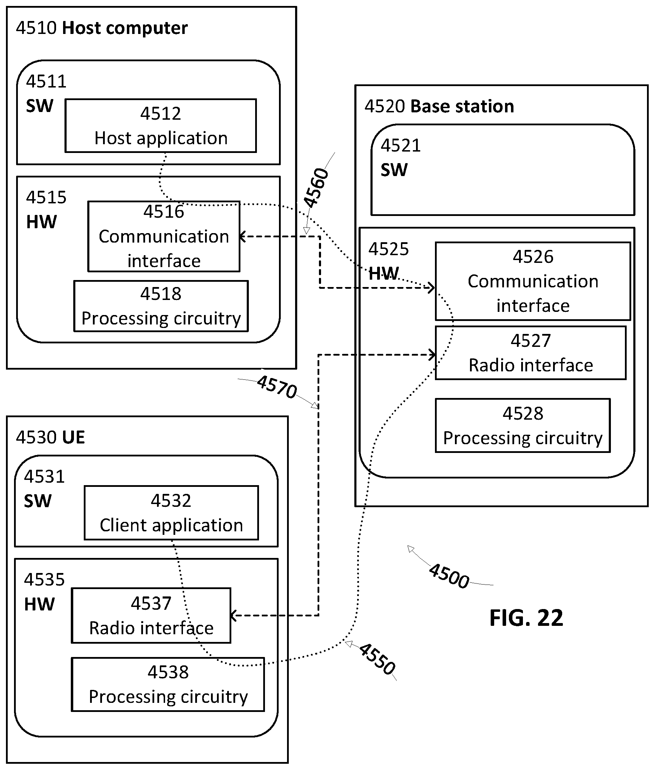

FIG. 22 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to FIG. 22. In communication system 4500, host computer 4510 comprises hardware 4515 including communication interface 4516 configured to set up and maintain a wired or wireless connection with an interface of a different communication device of communication system 4500. Host computer 4510 further comprises processing circuitry 4518, which may have storage and/or processing capabilities. In particular, processing circuitry 4518 may comprise one or more programmable processors, application-specific integrated circuits, field programmable gate arrays or combinations of these (not shown) adapted to execute instructions. Host computer 4510 further comprises software 4511, which is stored in or accessible by host computer 4510 and executable by processing circuitry 4518. Software 4511 includes host application 4512. Host application 4512 may be operable to provide a service to a remote user, such as UE 4530 connecting via OTT connection 4550 terminating at UE 4530 and host computer 4510. In providing the service to the remote user, host application 4512 may provide user data which is transmitted using OTT connection 4550.

Communication system 4500 further includes base station 4520 provided in a telecommunication system and comprising hardware 4525 enabling it to communicate with host computer 4510 and with UE 4530. Hardware 4525 may include communication interface 4526 for setting up and maintaining a wired or wireless connection with an interface of a different communication device of communication system 4500, as well as radio interface 4527 for setting up and maintaining at least wireless connection 4570 with UE 4530 located in a coverage area (not shown in FIG. 22) served by base station 4520. Communication interface 4526 may be configured to facilitate connection 4560 to host computer 4510. Connection 4560 may be direct or it may pass through a core network (not shown in FIG. 22) of the telecommunication system and/or through one or more intermediate networks outside the telecommunication system. In the embodiment shown, hardware 4525 of base station 4520 further includes processing circuitry 4528, which may comprise one or more programmable processors, application-specific integrated circuits, field programmable gate arrays or combinations of these (not shown) adapted to execute instructions. Base station 4520 further has software 4521 stored internally or accessible via an external connection.

Communication system 4500 further includes UE 4530 already referred to. Its hardware 4535 may include radio interface 4537 configured to set up and maintain wireless connection 4570 with a base station serving a coverage area in which UE 4530 is currently located. Hardware 4535 of UE 4530 further includes processing circuitry 4538, which may comprise one or more programmable processors, application-specific integrated circuits, field programmable gate arrays or combinations of these (not shown) adapted to execute instructions. UE 4530 further comprises software 4531, which is stored in or accessible by UE 4530 and executable by processing circuitry 4538. Software 4531 includes client application 4532. Client application 4532 may be operable to provide a service to a human or non-human user via UE 4530, with the support of host computer 4510. In host computer 4510, an executing host application 4512 may communicate with the executing client application 4532 via OTT connection 4550 terminating at UE 4530 and host computer 4510. In providing the service to the user, client application 4532 may receive request data from host application 4512 and provide user data in response to the request data. OTT connection 4550 may transfer both the request data and the user data. Client application 4532 may interact with the user to generate the user data that it provides.

It is noted that host computer 4510, base station 4520 and UE 4530 illustrated in FIG. 22 may be similar or identical to host computer 4430, one of base stations 4412a, 4412b, 4412c and one of UEs 4491, 4492 of FIG. 21, respectively. This is to say, the inner workings of these entities may be as shown in FIG. 22 and independently, the surrounding network topology may be that of FIG. 21.

In FIG. 22, OTT connection 4550 has been drawn abstractly to illustrate the communication between host computer 4510 and UE 4530 via base station 4520, without explicit reference to any intermediary devices and the precise routing of messages via these devices. Network infrastructure may determine the routing, which it may be configured to hide from UE 4530 or from the service provider operating host computer 4510, or both. While OTT connection 4550 is active, the network infrastructure may further take decisions by which it dynamically changes the routing (e.g., on the basis of load balancing consideration or reconfiguration of the network).

Wireless connection 4570 between UE 4530 and base station 4520 is in accordance with the teachings of the embodiments described throughout this disclosure. One or more of the various embodiments may improve the performance of OTT services provided to UE 4530 using OTT connection 4550, in which wireless connection 4570 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 4550 between host computer 4510 and UE 4530, in response to variations in the measurement results. The measurement procedure and/or the network functionality for reconfiguring OTT connection 4550 may be implemented in software 4511 and hardware 4515 of host computer 4510 or in software 4531 and hardware 4535 of UE 4530, or both. In embodiments, sensors (not shown) may be deployed in or in association with communication devices through which OTT connection 4550 passes; the sensors may participate in the measurement procedure by supplying values of the monitored quantities exemplified above, or supplying values of other physical quantities from which software 4511, 4531 may compute or estimate the monitored quantities. The reconfiguring of OTT connection 4550 may include message format, retransmission settings, preferred routing etc.; the reconfiguring need not affect base station 4520, and it may be unknown or imperceptible to base station 4520. Such procedures and functionalities may be known and practiced in the art. In certain embodiments, measurements may involve proprietary UE signaling facilitating host computer 4510's measurements of throughput, propagation times, latency and the like. The measurements may be implemented in that software 4511 and 4531 causes messages to be transmitted, in particular empty or 'dummy' messages, using OTT connection 4550 while it monitors propagation times, errors etc.

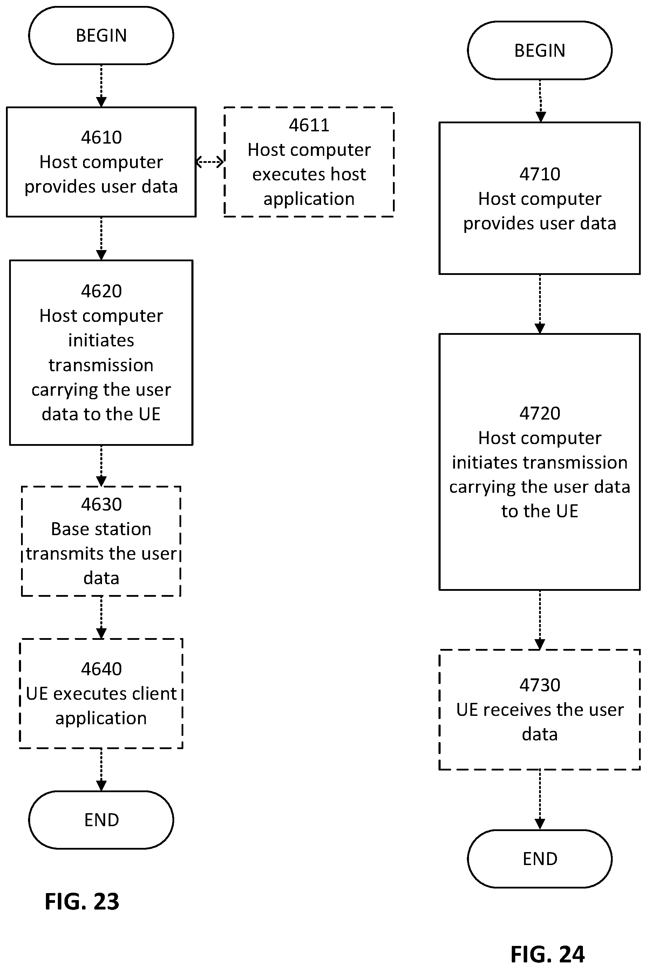

FIG. 23 illustrates methods implemented in a communication system including a host computer, a base station and a user equipment in accordance with some embodiments

FIG. 23 is a flowchart illustrating a method implemented in a communication system, in accordance with one embodiment. The communication system includes a host computer, a base station and a UE which may be those described with reference to FIGS. 21-22. For simplicity of the present disclosure, only drawing references to FIG. 23 will be included in this section. In step 4610, the host computer provides user data. In substep 4611 (which may be optional) of step 4610, the host computer provides the user data by executing a host application. In step 4620, the host computer initiates a transmission carrying the user data to the UE. In step 4630 (which may be optional), the base station transmits to the UE the user data which was carried in the transmission that the host computer initiated, in accordance with the teachings of the embodiments described throughout this disclosure. In step 4640 (which may also be optional), the UE executes a client application associated with the host application executed by the host computer.

FIG. 24 illustrates methods implemented in a communication system including a host computer, a base station and a user equipment in accordance with some embodiments.

FIG. 24 is a flowchart illustrating a method implemented in a communication system, in accordance with one embodiment. The communication system includes a host computer, a base station and a UE which may be those described with reference to FIGS. 21-22. For simplicity of the present disclosure, only drawing references to FIG. 24 will be included in this section. In step 4710 of the method, the host computer provides user data. In an optional substep (not shown) the host computer provides the user data by executing a host application. In step 4720, the host computer initiates a transmission carrying the user data to the UE. The transmission may pass via the base station, in accordance with the teachings of the embodiments described throughout this disclosure. In step 4730 (which may be optional), the UE receives the user data carried in the transmission.

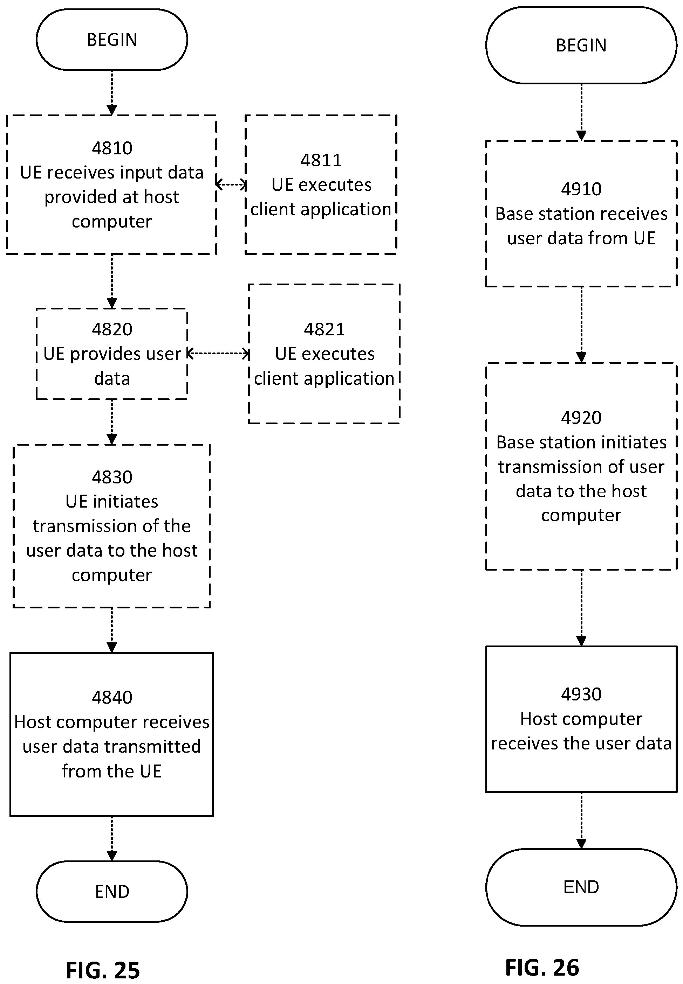

FIG. 25 illustrates methods implemented in a communication system including a host computer, a base station and a user equipment in accordance with some embodiments

FIG. 25 is a flowchart illustrating a method implemented in a communication system, in accordance with one embodiment. The communication system includes a host computer, a base station and a UE which may be those described with reference to FIGS. 21-22. For simplicity of the present disclosure, only drawing references to FIG. 25 will be included in this section. In step 4810 (which may be optional), the UE receives input data provided by the host computer. Additionally or alternatively, in step 4820, the UE provides user data. In substep 4821 (which may be optional) of step 4820, the UE provides the user data by executing a client application. In substep 4811 (which may be optional) of step 4810, the UE executes a client application which provides the user data in reaction to the received input data provided by the host computer. In providing the user data, the executed client application may further consider user input received from the user. Regardless of the specific manner in which the user data was provided, the UE initiates, in substep 4830 (which may be optional), transmission of the user data to the host computer. In step 4840 of the method, the host computer receives the user data transmitted from the UE, in accordance with the teachings of the embodiments described throughout this disclosure.

FIG. 26 illustrates methods implemented in a communication system including a host computer, a base station and a user equipment in accordance with some embodiments

FIG. 26 is a flowchart illustrating a method implemented in a communication system, in accordance with one embodiment. The communication system includes a host computer, a base station and a UE which may be those described with reference to FIGS. 21-22. For simplicity of the present disclosure, only drawing references to FIG. 26 will be included in this section. In step 4910 (which may be optional), in accordance with the teachings of the embodiments described throughout this disclosure, the base station receives user data from the UE. In step 4920 (which may be optional), the base station initiates transmission of the received user data to the host computer. In step 4930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors ("DSPs"), special-purpose digital logic, and the like. The processing circuitry may be configured to execute program code stored in memory, which may include one or several types of memory such as read-only memory ("ROM"), random-access memory ("RAM"), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Further definitions and embodiments are discussed below.

In the above-description of various embodiments of present the present disclosure, it is to be understood that the terminology used herein is for the purpose of describing particular embodiments only and is not intended to be limiting of present the present disclosure. Unless otherwise defined, all terms (including technical and scientific terms) used herein have the same meaning as commonly understood by one of ordinary skill in the art to which present the present disclosure belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present the present disclosure. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. **It is** understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present the present disclosure may be embodied in hardware and/or in software (including firmware, resident software, micro-code, etc.) that runs on a processor such as a digital signal processor, which may collectively be referred to as "circuitry," "a module" or variants thereof.

**It** should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of the present disclosure. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present the present disclosure. All such variations and modifications are intended to be included herein within the scope of present the present disclosure, which is defined by the appended claims. Accordingly, the above disclosed subject matter is to be considered illustrative, and not restrictive, and the examples of embodiments are intended to cover all such modifications, enhancements, and other embodiments, which fall within the scope of present the present disclosure which is defined by the appended claims.

## Claims

1. A method by a user equipment, UE, capable of operating in a multi-radio dual connectivity, MR-DC, mode in a network, the method comprising:
initiating (1510) a re-establishment procedure;
delaying (1520) a MR-DC release when the re-establishment procedure is initiated responsive to the UE being configured with a conditional handover, CHO;
performing cell selection (1525) and as an outcome having a UE selected cell;
responsive to the UE being configured with the CHO and the UE having a stored configuration for the selected cell, applying (1530) the stored configuration; and
responsive to the UE being configured with the CHO and the UE not having a stored configuration for the selected cell, performing (1540) a MR-DC release.

2. The method of Claim 1, wherein the stored configuration for the selected cell corresponds to a ReconfigurationWithSync information element being included in MasterCellGroup in VarConditionalReconfig.

3. The method of any of Claims 1-2, wherein the MR-DC configuration is one of: SRB3; and measurement configuration associated with a Secondary Cell Group, SCG.

4. The method of any of Claims 1-3, wherein releasing the MR-DC comprises at least one of:
releasing SRB3, if configured;
releasing measurement configuration associated with a Secondary Cell Group, SCG.

5. The method of any of Claims 1-4, wherein, in response to the UE being configured with new radio, NR, SCG performing the MR-DC release comprises releasing the SCG configuration by:
resetting (1710) a SCG MAC if configured;
performing (1720) a radio link control, RLC, bearer release for each RLC bearer that is part of the SCG configuration; and
releasing (1730) the SCG configuration.

6. The method of any of Claims 1-5, wherein, in response to the UE being configured with conditional primary secondary cell change, CPC, performing the MR-DC release comprises releasing the CPC configuration.

7. The method of any of Claims 1-6, wherein, in response to the UE being configured with conditional primary secondary cell addition, CPA, performing the MR-DC release comprises releasing the CPA configuration.

8. The method of any of Claims 1-7, wherein CHO, conditional primary secondary cell addition, CPA, and conditional primary secondary cell change, CPC, comprise conditional reconfigurations, and
wherein deleting the CHO, CPA, and/or CPC comprises releasing and/or deleting a UE variable that corresponds to configuration storage.

9. The method of Claim 1, further comprising determining (1550) if the UE is configured with conditional reconfiguration.

10. The method of Claim 1, wherein initiating the re-establishment procedure is performed responsive to at least one of:
detecting radio link failure of a master cell group, MCG;
re-configuration with sync failure of the MCG;
mobility from NR failure;
receiving an integrity check failure indication from lower layers concerning SRB1 or SRB2, except if the integrity check failure is detected on an RRCR establishment message;
upon an RRC connection reconfiguration failure;
detecting radio link failure for a secondary cell group, SCG, while MCG transmission is suspended;
reconfiguration with sync failure of the SCG while MCG transmission is suspended;
upon SCG change failure while MCG transmission in NR Evolved universal terrestrial radio access, E-UTRA, DC, NE-DC;
upon SCG configuration failure while MCG transmission is suspended; and
upon integrity check failure indication from SCG lower layers concerning SRB3 while MCG is suspended.

11. The method of Claim 1, wherein selecting the cell comprises selecting the cell before delaying the deletion of MR-DC, and
wherein responsive to the UE determining if it is configured with conditionalReconfiguration, the method further comprising:
applying (1570) a stored condRRCReconfig associated with the cell; and
responsive to the UE determining the cell is not one of the candidate cells which a reconfigurationWithSync is included in a masterCellGroup in VarCondtionalReconfig, performing (1540) the MR-DC release.

12. A user equipment, UE, (1200) capable of operating in a multi-radio dual connectivity, MR-DC, mode in a network, the UE comprising:
processing circuitry (1203); and
memory (1205) coupled with the processing circuitry and storing instructions executable by the processing circuitry to cause the UE to perform operations comprising:
any operations of Claims 1-11.

13. A computer program comprising program code to be executed by processing circuitry (1203) of a user equipment, UE, (1200), whereby execution of the program code causes the UE to perform operations comprising any operations of Claims 1-11.

14. A computer program product comprising a non-transitory computer readable medium storing program code executable by processing circuitry (1203) of a user equipment, UE, (1200) to perform operations comprising any operations of Claims 1-11.

## Patentansprüche

1. Verfahren durch eine Benutzereinrichtung, UE, die in der Lage ist, in einem Mehrfunk-Dualkonnektivitätsmodus, MR-DC-Modus, zu operieren, wobei das Verfahren Folgendes umfasst:
Initiieren (1510) einer Wiederherstellungsprozedur;
Verzögern (1520) einer MR-DC-Freigabe, wenn die Wiederherstellungsprozedur in Reaktion darauf initiiert wird, dass die UE mit einem bedingten Handover, CHO, konfiguriert ist;
Durchführen von Zellauswahl (1525) und als Ergebnis Aufweisen einer von der UE ausgewählten Zelle;
in Reaktion darauf, dass die UE mit dem CHO konfiguriert ist und die UE eine gespeicherte Konfiguration für die ausgewählte Zelle aufweist, Anwenden (1530) der gespeicherten Konfiguration; und
in Reaktion darauf, dass die UE mit dem CHO konfiguriert ist und die UE nicht eine gespeicherte Konfiguration für die ausgewählte Zelle aufweist, Durchführen (1540) einer MR-DC-Freigabe.

2. Verfahren nach Anspruch 1, wobei die gespeicherte Konfiguration einem ReconfigurationWithSync-Informationselement entspricht, das in einer MasterCellGroup in VarConditionalReconfig umfasst ist.

3. Verfahren nach einem der Ansprüche 1-2, wobei die MR-DC-Konfiguration eines von Folgenden ist:
SRB3; und
eine Messkonfiguration, die mit einer Sekundärzellengruppe, SCG, assoziiert ist.

4. Verfahren nach einem der Ansprüche 1-3, wobei das Freigeben der MR-DC mindestens eines von Folgendem umfasst:
Freigeben von SRB3, falls konfiguriert;
Freigeben einer Messkonfiguration, die mit einer Sekundärzellengruppe, SCG, assoziiert ist.

5. Verfahren nach einem der Ansprüche 1-4, wobei das Durchführen der MR-DC-Freigabe in Reaktion darauf, dass die UE mit einer New Radio-SCG, NR-SCG, konfiguriert ist, Freigeben der SCG-Konfiguration durch Folgendes umfasst:
Zurücksetzen (1710) einer SCG-MAC, falls konfiguriert;
Durchführen (1720) einer Funkverbindungssteuerungs-Trägerfreigabe, RLC-Trägerfreigabe, für jeden RLC-Träger, der Teil der SCG-Konfiguration ist; und
Freigeben (1730) der SCG-Konfiguration.

6. Verfahren nach einem der Ansprüche 1-5, wobei das Durchführen der MR-DC-Freigabe in Reaktion darauf, dass die UE mit einem bedingten Wechsel einer primären Sekundärzelle, CPC, konfiguriert ist, Freigeben der CPC-Konfiguration umfasst.

7. Verfahren nach einem der Ansprüche 1-6, wobei das Durchführen der MR-DC-Freigabe in Reaktion darauf, dass die UE mit einer bedingten Hinzufügung einer primären Sekundärzelle, CPA, konfiguriert ist, Freigeben der CPA-Konfiguration umfasst.

8. Verfahren nach einem der Ansprüche 1-7, wobei das CHO, die bedingte Hinzufügung einer primären Sekundärzelle, CPA, und der bedingte Wechsel einer primären Sekundärzelle, CPC, bedingte Rekonfigurationen umfassen, und
wobei das Löschen des CHO, der CPA und/oder des CPC Freigeben und/oder Löschen einer UE-Variablen umfasst, die einem Konfigurationsspeicher entspricht.

9. Verfahren nach Anspruch 1, ferner umfassend Bestimmen (1550), ob die UE mit einer bedingten Rekonfiguration konfiguriert ist.

10. Verfahren nach Anspruch 1, wobei das Initiieren der Wiederherstellungsprozedur in Reaktion auf mindestens eines von Folgendem durchgeführt wird:
Erkennen eines Funkverbindungsausfalls einer Master-Zellen-Gruppe, MCG;
Rekonfiguration mit Synchronisationsfehler der MCG;
Mobilität aufgrund eines NR-Ausfalls;
Empfang einer Integritätsprüfungsfehleranzeige von unteren Schichten in Bezug auf SRB1 oder SRB2, es sei denn, der Integritätsprüfungsfehler wird bei einer RRCR-Aufbaunachricht erkannt;
bei einem RRC-Verbindungsrekonfigurationsfehler;
Erkennen eines Funkverbindungsausfalls für eine Sekundärzellengruppe, SCG, während die MCG-Übertragung unterbrochen ist;
Rekonfiguration mit Synchronisationsfehler der SCG, während die MCG-Übertragung unterbrochen ist;
bei einem Fehler bei einem SCG-Wechsel während der MCG-Übertragung in NR Evolved Universal Terrestrial Radio Access, E-UTRA, DC, NE-DC;
bei einem SCG-Konfigurationsfehler, während die MCG-Übertragung unterbrochen ist; und
bei einer Integritätsprüfungsfehleranzeige von unteren SCG-Schichten in Bezug auf SRB3, während MCG unterbrochen ist.

11. Verfahren nach Anspruch 1, wobei das Auswählen der Zelle Auswählen der Zelle vor dem Verzögern der Löschung von MR-DC umfasst, und
wobei das Verfahren in Reaktion darauf, dass die UE bestimmt, ob sie mit conditionalRekonfiguration konfiguriert ist, ferner Folgendes umfasst:
Anwenden (1570) einer gespeicherten condRRCReconfig, die mit der Zelle assoziiert ist; und
in Reaktion darauf, dass die UE bestimmt, dass die Zelle keine der Kandidatenzellen ist, für die eine reconfigurationWithSync in einer masterCellGroup in VarConditionalReconfig umfasst ist, Durchführen (1540) der MR-DC-Freigabe.

12. Benutzereinrichtung, UE, (1200), die in der Lage ist, in einem Mehrfunk-Dualkonnektivitätsmodus, MR- DC-Modus, zu operieren, wobei die UE Folgendes umfasst:
Verarbeitungsschaltungsanordnung (1203); und
Speicher (1205), der mit der Verarbeitungsschaltungsanordnung gekoppelt ist und Anweisungen speichert, die von der Verarbeitungsschaltungsanordnung ausgeführt werden können, um die UE zum Durchführen von Operationen zu veranlassen, die Folgendes umfassen:
alle Operationen nach Anspruch 1-11.

13. Computerprogramm, umfassend Programmcode, der von Verarbeitungsschaltungsanordnung (1203) einer Benutzereinrichtung, UE, (1200) ausgeführt werden soll, wobei die Ausführung des Programmcodes die UE veranlasst, Operationen durchzuführen, die alle Operationen nach Anspruch 1-11 umfassen.

14. Computerprogrammprodukt, umfassend ein nichtflüchtiges computerlesbares Medium, das Programmcode speichert, der von Verarbeitungsschaltungsanordnung (1203) einer Benutzereinrichtung, UE, (1200) ausgeführt werden kann, um Operationen durchzuführen, die alle Operationen nach Anspruch 1-11 umfassen.

## Revendications

1. Procédé par un équipement utilisateur, UE, capable de fonctionner dans un mode à connectivité double multi-radio, MR-DC, dans un réseau, le procédé comprenant :
l'initiation (1510) d'une procédure de rétablissement ;
le retardement (1520) d'une libération de MR-DC lorsque la procédure de rétablissement est initiée en réponse au fait que l'UE est configuré avec un transfert intercellulaire conditionnel, CHO ;
la réalisation d'une sélection de cellule (1525) et, en conséquence, le fait d'avoir une cellule sélectionnée par l'UE ;
en réponse au fait que l'UE est configuré avec le CHO et que l'UE présente une configuration stockée pour la cellule sélectionnée, l'application (1530) de la configuration stockée ; et
en réponse au fait que l'UE est configuré avec le CHO et que l'UE ne présente pas de configuration stockée pour la cellule sélectionnée, la réalisation (1540) d'une libération de MR-DC.

2. Procédé selon la revendication 1, dans lequel la configuration stockée pour la cellule sélectionnée correspond à un élément d'information ReconfigurationWithSync étant inclus dans MasterCellGroup dans VarConditionalReconfig.

3. Procédé selon l'une quelconque des revendications 1 et 2, dans lequel la configuration de MR-DC est l'une parmi :
SRB3 ; et
une configuration de mesure associée à un groupe de cellules secondaires, SCG.

4. Procédé selon l'une quelconque des revendications 1 à 3, dans lequel la libération de MR-DC comprend au moins l'une parmi :
la libération de SRB3, s'il est configuré ;
la libération d'une configuration de mesure associée à un groupe de cellules secondaires, SCG.

5. Procédé selon l'une quelconque des revendications 1 à 4, dans lequel, en réponse au fait que l'UE est configuré avec un SCG nouvelle radio, NR, la réalisation de la libération de MR-DC comprend la libération de la configuration de SCG par :
la réinitialisation (1710) d'un MAC SCG s'il est configuré ;
la réalisation (1720) d'une libération de support de commande de liaison radio, RLC, pour chaque support RLC faisant partie de la configuration de SCG ; et
la libération (1730) de la configuration de SCG.

6. Procédé selon l'une quelconque des revendications 1 à 5, dans lequel, en réponse au fait que l'UE est configuré avec un changement conditionnel de cellules secondaires primaires, CPC, la réalisation de la libération de MR-DC comprend la libération de la configuration de CPC.

7. Procédé selon l'une quelconque des revendications 1 à 6, dans lequel, en réponse au fait que l'UE est configuré avec un ajout conditionnel de cellules secondaires primaires, CPA, la réalisation de la libération de MR-DC comprend la libération de la configuration de CPA.

8. Procédé selon l'une quelconque des revendications 1 à 7, dans lequel un CHO, un ajout conditionnel de cellules secondaires primaires, CPA, et un changement conditionnel de cellules secondaires primaires, CPC, comprennent des reconfigurations conditionnelles, et
dans lequel la suppression du CHO, du CPA et/ou du CPC comprend la libération et/ou la suppression d'une variable d'UE qui correspond à un stockage de configuration.

9. Procédé selon la revendication 1, comprenant en outre la détermination (1550) si l'UE est configuré avec une reconfiguration conditionnelle.

10. Procédé selon la revendication 1, dans lequel l'initiation de la procédure de rétablissement est réalisée en réponse à au moins l'une parmi :
la détection d'un échec de liaison radio d'un groupe de cellules maître, MCG ;
la reconfiguration avec un échec de synchronisation du MCG ;
la mobilité à partir d'un échec NR ;
la réception d'une indication d'échec de contrôle d'intégrité depuis des couches inférieures concernant SRB1 ou SRB2, sauf si l'échec de contrôle d'intégrité est détecté sur un message d'établissement RRCR ;
lors d'un échec de reconfiguration de connexion RRC ;
la détection d'un échec de liaison radio pour un groupe de cellules secondaires, SCG, pendant qu'une transmission MCG est suspendue ;
la reconfiguration avec échec de synchronisation du SCG pendant qu'une transmission MCG est suspendue ;
lors d'un échec de changement de SCG pendant une transmission MCG dans une DC d'accès radio terrestre universel évolué, E-UTRA, NR, NE-DC ;
lors d'un échec de configuration de SCG pendant qu'une transmission MCG est suspendue ; et
lors d'une indication d'échec de contrôle d'intégrité depuis des couches inférieures SCG concernant SRB3 pendant qu'un MCG est suspendu.

11. Procédé selon la revendication 1, dans lequel la sélection de la cellule comprend la sélection de la cellule avant le retardement de la suppression de MR-DC, et
dans lequel, en réponse à la détermination par l'UE s'il est configuré avec conditionalReconfiguration, le procédé comprenant en outre :
l'application (1570) d'un condRRCReconfig stocké associé à la cellule ; et
en réponse au fait que l'UE détermine que la cellule n'est pas l'une des cellules candidates dont un reconfigurationWithSync est inclus dans un masterCellGroup dans VarConditionalReconfig, la réalisation (1540) de la libération de MR-DC.

12. Equipement utilisateur, UE, (1200) capable de fonctionner dans un mode à connectivité double multi-radio, MR-DC, dans un réseau, l'UE comprenant :
une circuiterie de traitement (1203) ; et
une mémoire (1205) couplée à la circuiterie de traitement et stockant des instructions exécutables par la circuiterie de traitement pour amener l'UE à réaliser des opérations comprenant :
des opérations quelconques selon les revendications 1 à 11.

13. Programme informatique comprenant un code de programme à exécuter par une circuiterie de traitement (1203) d'un équipement utilisateur, UE, (1200), selon lequel une exécution du code de programme amène l'UE à réaliser des opérations comprenant des opérations quelconques selon les revendications 1 à 11.

14. Produit de programme informatique comprenant un support non transitoire lisible par ordinateur stockant un code de programme exécutable par une circuiterie de traitement (1203) d'un équipement utilisateur, UE, (1200) pour réaliser des opérations comprenant des opérations quelconques selon les revendications 1 à 11.
